# EUROPEAN PATENT APPLICATION

(11) **EP 2 999 211 A1**
(43) Date of publication of application: **23.03.2016**
(21) Application number: 15185269.6
(22) Date of filing: 15.09.2015
(51) Int. Cl.: H04N 5/445, H04N 21/482, H04N 21/431

(54) **DISPLAY APPARATUS AND METHOD OF DISPLAYING INDICATOR THEREOF**

(30) Priority: 17.09.2014 KR 20140123568
(71) Applicant: Samsung Electronics Co., Ltd., Gyeonggi-do 16677 (KR)
(72) Inventor: CHOI, Yoo-jin, Seoul (KR); KIM, Ik-soo, Seoul (KR); LEE, Ki-jung, Seoul (KR); BEHAR, Yvse, San Francisco, CA 94123 (US); MIN, Yu-ri, Seoul (KR); HWANG, Woo-seok, Seoul (KR); MURPHY-REINHERTZ, Noah, San Francisco, CA 94114 (US)
(74) Representative: Hewett, Jonathan Michael Richard

(57) **Abstract**

A display apparatus displays an indicator by moving an indicator along a border of a display region in response to a signal for changing a state of the display apparatus, and stops the movement of the indicator in a predetermined position of the border.

## Description

The present invention relates to a display apparatus and a method of displaying an indicator thereof, and more particularly, to a display apparatus and a method of displaying an indicator thereof, which display an indicator for indicating a state of the display apparatus.

Display apparatuses (e.g., televisions (TVs)) may display an indicator for indicating states thereof on display regions. For example, in response to sound having a certain volume being output in the display apparatuses, the display apparatuses may display the amount of the volume in the display regions with numbers. In response to broadcast content for a specific channel being output in the display apparatuses, the display apparatuses may display channel information with numbers.

In such a situation, a portion of image content in the display region may be covered by the number indicating the size of the volume or the channel information. Accordingly, the viewing experience of a user may be degraded.

Further, in response to a plurality of indicators for indicating a state of the display apparatus being simultaneously displayed in the display region, the view of a user may be further degraded.

One or more exemplary embodiments of the present invention relate to a display apparatus and a method of displaying an indicator thereof, which display an indicator for indicating a state of the display apparatus without viewing disturbance of a user for image content in response to the image content being output in the display apparatus.

In particular, one or more exemplary embodiments relate to a display apparatus and a method of displaying an indicator thereof, which display an indicator for indicating a state of the display apparatus without covering of image content even in response to a state of a display apparatus being changed or states of various kinds of display apparatuses being provided.

According to an aspect of an exemplary embodiment, there is provided a method of displaying an indicator in a display apparatus, the method including receiving a signal for changing a state of the display apparatus; in response to receiving the signal for changing the state of the display apparatus, displaying the indicator moving along a border of a display region; and stopping the indicator in a predetermined position of the border, wherein at least one of a length of the indicator, a width of the indicator, and a color of the indicator is changed while the indicator is being moved.

In response to the indicator being a line, a length of the line may be changed while the line is being moved.

The signal for changing the state of the display apparatus may be a signal for changing the display apparatus from an on state to an off state or from the off state to the on state.

The method may further include displaying the indicator in the border of the display region before the signal for changing the state of the display apparatus is received.

The signal for changing the state of the display apparatus may be at least one of a signal for changing a channel being displayed in the display apparatus and a signal for changing a volume being output in the display apparatus.

The border of the display region in which the indicator is displayed may be covered with a semitransparent bezel or a transparent bezel.

According to an aspect of an exemplary embodiment, there is provided a method of displaying an indicator performed in a display apparatus, the method including displaying image content in a display region; acquiring information related to the image content while the image content is displayed; and displaying the indicator in a position corresponding to the acquired information in a border of the display region while the image content is displayed while the image content is displayed.

In response to a plurality of pieces of image content being displayed in the display region, the displaying of the indicator in the position corresponding to the acquired information in the border of the display region may include displaying the indicator in a position corresponding to focused image content from among the plurality of pieces of image content in the border of the display region.

In response to the image content being a menu, the displaying of the indicator in the position corresponding to the acquired information in the border of the display region may include displaying the indicator in the border corresponding to a movable direction of the indicator through the menu.

According to an aspect of an exemplary embodiment, there is provided a method of displaying an indicator performed in a display apparatus, the method including displaying image content in a display region; displaying additional information in the display region while the image content is displayed; and displaying an indicator in a position corresponding to the additional information in a border of the display region while the image content is displayed.

According to an aspect of an exemplary embodiment, there is provided a display apparatus which displays an indicator, the display apparatus including a display; and a controller configured to control the display to move the indicator along a border of a display region and, in response to receiving a signal for changing a state of the display apparatus, stop a movement of the indicator in a predetermined position of the border, wherein at least one of a length of the indicator, a width of the indicator, and a color of the indicator is changed while the indicator is being moved.

In response to the indicator being a line, a length of the line may be changed while the line is being moved.

The signal for changing the state of the display apparatus may be a signal for changing the display apparatus from an on state to an off state or from the off state to the on state.

The controller may be further configured to control the display to display the indicator in the border of the display region before the signal for changing the state of the display apparatus is received.

The signal for changing the state of the display apparatus may be at least one of a signal for changing a channel being displayed in the display apparatus and a signal for changing volume being output in the display apparatus.

The border of the display region in which the indicator is displayed may be covered with a semitransparent bezel or a transparent bezel.

According to an aspect of an exemplary embodiment, there is provided a display apparatus which displays an indicator, the display apparatus including a display configured to display image content in a display region; and a controller configured to acquire information related to the image content and control the display to display the indicator in a position corresponding to the acquired information in a border of the display region while the image content is displayed.

In response to a plurality of pieces of image content being displayed in the display region, the controller may be configured to control the display to display the indicator in a position corresponding to focused image content among the plurality of pieces of image content in the border of the display region.

In response to the image content being a menu, the controller may control the display to display the indicator in the border corresponding to a movable direction of the indicator through the menu.

According to an aspect of an exemplary embodiment, there is provided a display apparatus which displays an indicator, the display apparatus including a display configured to display image content in a display region; and a controller configured to control the display to display additional information in the display region and to display the indicator in a position corresponding to the additional information in a border of the display region while the image content is displayed.

According to an aspect of an exemplary embodiment, there is provided a method for displaying an indicator, the method including: displaying the indicator in a position corresponding to a state of a display apparatus; receiving a request to change the state of the display apparatus; adjusting the indicator according to the received request to change the state of the display apparatus.

In response to the received request to change the state of the display apparatus being a request to turn on the display apparatus or turn off the display apparatus, the adjusting the indicator may include moving the indicator along a border region of the display apparatus.

In response to the received request to change the state of the display apparatus being a request to change a volume of the display apparatus, the adjusting the indicator may include displaying a volume icon in a border region of the display apparatus.

The method may further include displaying a menu in which settings for adjusting the indicator can be set by a user.

The settings may include at least one of a size of the indicator, a color of the indicator, and a type of the indicator.

As described above, as an indicator is provided in a border of a display region, the user may check a state of a display apparatus without any interference of the image content. Therefore, a user may change the state of the display apparatus without the viewing interference of the image content. Accordingly, the user may recognize the border of the display region as a new interaction region.

Further, since the border of the display region is close to a bezel, the user may recognize various visual effects appearing in the border as effects appearing in the bezel. In particular, the effect may be further maximized in response to the border to which the indicator is provided being covered with a transparent or semitransparent bezel.

In this way, the viewing experience of the user may be consistently maintained through the natural and intuitive indicator provided in the border of the display region.

Additional aspects and advantages of exemplary embodiments are set forth in the detailed description, and should be obvious from the detailed description, or may be learned by practicing one or more exemplary embodiments.

The above and/or other aspects will be more apparent from the following description of exemplary embodiments, with reference to the accompanying drawings, in which:
FIG. 1 is a block diagram illustrating a configuration of a display apparatus according to an exemplary embodiment;
FIG. 2 is a diagram illustrating a border of a display region close to a bezel according to an exemplary embodiment;
FIGS. 3 to 31 are diagrams illustrating processes of displaying an indicator according to one or more exemplary embodiments;
FIG. 32 is a diagram illustrating a display region according to an exemplary embodiment;
FIG. 33 is a schematic block diagram illustrating a configuration of a display apparatus according to another exemplary embodiment; and
FIGS. 34 to 37 are flowcharts illustrating methods of displaying an indicator in a display apparatus according to one or more exemplary embodiments.

Reference will now be made to exemplary embodiments, examples of which are illustrated in the accompanying drawings, wherein like reference numerals refer to like elements throughout. Exemplary embodiments should not be construed as limited to the particular shapes of regions illustrated herein. Further, the present invention may be embodied in different forms and it should be appreciated by those of ordinary skill in the art that changes may be made to exemplary embodiments without departing from theinvention, the scope of which is defined by the claims. Also, well-known functions or constructions might not be described in detail if it would obscure the disclosure with unnecessary detail.

It should be understood that, although the terms first, second, etc. may be used herein in reference to elements, such elements should not be construed as limited by these terms. The terms are used to distinguish an element from other elements.

The terminology used herein to describe one or more exemplary embodiments is not intended to limit the scope of the disclosure. The articles "a," "an," and "the" are singular, however, the use of singular form in the disclosure should not preclude the presence of more than one element. In other words, elements referred to in the singular refer to one or more elements unless the context clearly indicates otherwise. It should be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

In one or more exemplary embodiments, "module" or "unit" may perform at least one function or operation, and may be implemented with hardware, software, or a combination thereof. A "plurality of modules" or "plurality of units" may be implemented with at least one processor through integration thereof with at least one module.

Expressions such as "at least one of," when preceding a list of elements, modify the entire list of elements and do not modify the individual elements of the list.

Hereinafter, one or more exemplary embodiments are described in detail with reference to the accompanying drawings.

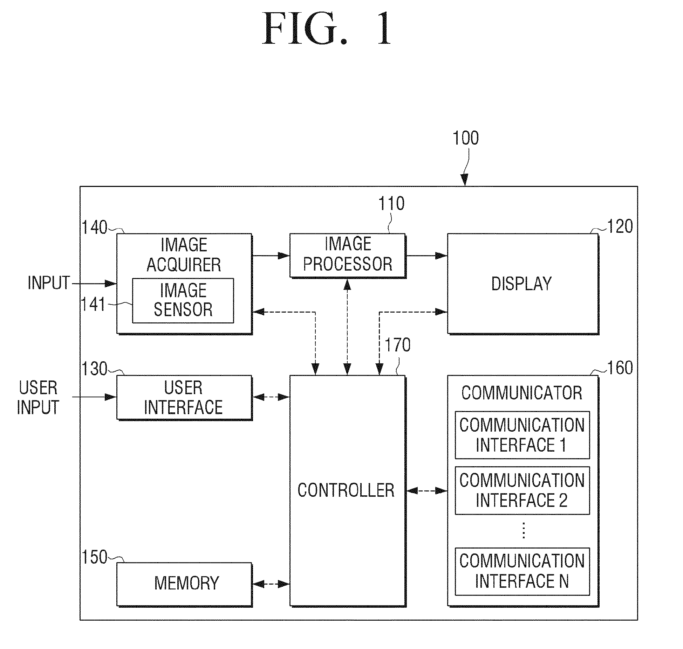

FIG. 1 is a block diagram illustrating a configuration of a display apparatus 100 according to an exemplary embodiment. The display apparatus 100 may be a digital TV. However, this is merely exemplary, and the display apparatus 100 may be any one of various display apparatuses that display digital images, such as a smart phone, a tablet personal computer (PC), a laptop PC, a smart TV, or a desktop PC. The display apparatus 100 includes an image processor 110 configured to process an image signal received from the outside, a display 120 configured to display the image signal processed through the image processor 110 as an image, a user input unit (e.g., user interface) 130 configured to receive a user input, an image acquisition unit (e.g., image acquirer) 140 configured to acquire an external image by imaging an external environment of the display apparatus 100, a storage unit (e.g., memory) 150 configured to store various types of pieces of data, a communication unit (e.g., communicator) 160 configured to perform communication with an external apparatus in a wired or wireless manner, and a controller 170 configured to control the display apparatus 100.

The image processor 110 may perform various preset image-processing on an image signal. The image processor 110 may provide the image signal which is subjected to the image-processing to the display 120 so that the image content may be displayed in a display region.

For example, the image processor 110 may include an image receiver configured to receive the image signal from the outside. The image processor 110 may be implemented with various types based on the standard of the received image signal and the type of display apparatus 100. For example, the image processor 110 may receive a radio frequency (RF) signal transmitted from a broadcasting station in a wireless manner, or receive an image signal with a composite video standard, a component video standard, a super video standard, a SCART standard, a high definition multimedia interface (HDMI) standard, etc., in a wired manner. In response to the image signal being a broadcast signal, the image processor 110 may include a tuner configured to tune the broadcast signal according to a channel.

The image signal may be provided by an external apparatus. For example, the image signal may be input from an external apparatus such as a PC, an audio/video (AV) apparatus, a smart phone, or a smart pad. As another example, the image signal may be a signal based on data received through a network such as the Internet. In this example, the display apparatus 100 may perform network communication through the communication unit 160. As another example, the image signal may be a signal based on data stored in the storage unit 150 such as a flash memory or a hard disc. The storage unit 150 may be provided inside or outside of the display apparatus 100. In response to the storage unit 150 being provided outside of the display apparatus 100, the display apparatus 100 may further include a connector to which the storage unit 150 is coupled.

The kinds of image-processing performed in the image processor 110 are not limited. For example, the image-processing may include at least one of decoding, deinterlacing, frame refresh rate conversion, scaling, noise reduction for improving image quality, detail enhancement, and line scanning.

The image processor 110 may be implemented with a group of individual configurations capable of independently performing processes or with a system-on-chip (SOC) in which various functions are integrated.

In an exemplary embodiment, the image processor 110 may include a main image processor and a sub image processor.

The main image processor may process an image signal received from a broadcasting station or an external apparatus. The sub image processor may perform a function to process pixels in a border of a display region so as to display a state of the display apparatus 100. In general, the controller 170 may provide the image signal on which the image-processing is performed using the main image processor to the entire display region. However, the main image processor may transfer processing of the pixels in the border of the display region to the sub image processor in response to a signal requested for displaying the state of the display apparatus being received from the user or in response to a predefined signal (e.g., a signal requested for displaying the state of the display apparatus at a specific time) being received. In this example, a width of the display region for which processing may be transferred by the main image processor may be a value in a range of from 5 pixels to 10 pixels. The width of the border may be adjusted according to the state of the display apparatus 100. The sub image processor may provide an indicator for indicating the state of the display apparatus 100, on which the image-processing is performed using the pixels to which the initiative are transferred, to the border of the display region.

If the border of the display region is covered with a transparent or semitransparent bezel, the pixels of the display region which are to be processed through the main image processor and the sub image processor may be determined in advance. For example, the pixels processed through the sub image processor may be predetermined as pixels corresponding to the border covered with the transparent or semitransparent bezel. The pixels processed through the main image processor may be predetermined as pixels of the display region other than the pixels corresponding to the border of the display region.

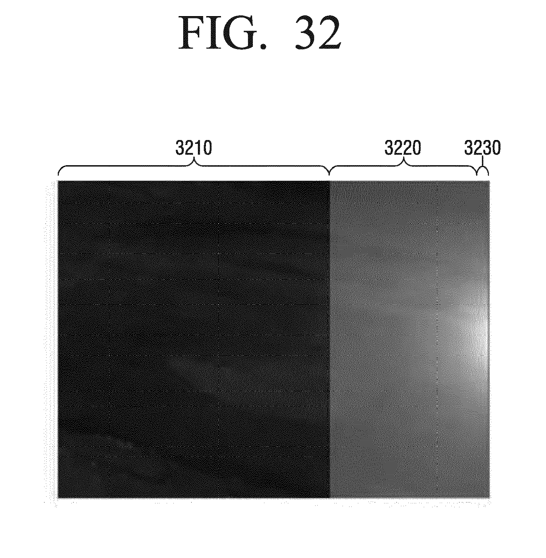

In another exemplary embodiment, the image processor 110 may process the pixels of the border of the display region without dividing the main image processor and the sub image processor. According to an exemplary embodiment, referring to FIG. 32, a display region may include an image content display region 3210, a transparent indicator region 3220 in which image content is displayed together with an indicator, and an indicator region 3230 in which only the indicator is displayed. The border of the display region may be a region including the transparent indicator region 3220 combined with the indicator region 3230 or a region including only the indicator region 3230. A width of the indicator region 3230 may be, for example, a value in a range of 5 pixels to 10 pixels. A width of the region including the transparent indicator region 3220 and the indicator region 3230 may be, for example, a value in a range of 50 pixels to 100 pixels.

The display 120 may display an image based on the image signal processed through the image processor 110. The type of the display 120 is not limited to any particular type, and the display 120 may be implemented with various display types such as liquid crystal (LC), plasma, light-emitting diode, organic light-emitting diode, surface-conduction electron-emitter, carbon nano tube, or nano crystal, etc.

The display 120 may further include additional configurations according to the implementation type thereof. For example, in response to the display 120 being implemented as a LC type, the display 120 may include a LC display panel, a backlight unit configured to provide light to the LC display panel, and a panel driving substrate configured to drive the LC display panel.

The display 120 may include a touch screen to which an input is received according to the user's touch. The touch screen may be implemented with a resistive type, a capacitive type, an infrared (IR) type, or an acoustic wave type.

The display 120 may be provided in a form coupled with the bezel. The bezel is a mechanism serving to fix a display panel to a front of the display apparatus 100, and is configured to cover the display panel. A region of an inner side of the bezel in the front of the display apparatus 100 in which the image content is displayed may be the display region.

The user input unit 130 may transmit various preset control commands or other information to the controller 170 in response to the user's operation.

In an exemplary embodiment, the user input unit 130 may receive an input signal from an input device which is provided in a main body of the display apparatus 100 or is provided separately from the display apparatus 100. For example, the user input unit 130 may receive the input signal through a keypad (or input panel) including buttons such as a number key or a menu key provided in the main body of the display apparatus 100. As another example, the user input unit 130 may receive the input signal through a separate input device such as a remote controller configured to generate a command, data, information, and signal which are preset to remotely control a TV and transmit the command, data, information, and signal to the display apparatus 100, a keyboard, a mouse, or a pointing device. The separate input device is an external device which may be coupled to the main body of the display apparatus 100 and may perform wireless communication with the display apparatus 100, and the wireless communication may include IR communication, RF communication, wireless local area network (WLAN), and the like. The input device may transmit a command preset by the user's operation to the display apparatus 100.

As an example, the image acquisition unit 140 may be implemented with a camera configured to capture an external environment. In this example, the camera may be installed in a certain position of the display apparatus 100, for example, in a top of the display apparatus 100. However, the installation position of the camera is not limited thereto, and in some examples, the camera may be installed outside of the display apparatus 100, separately from the main body of the display apparatus 100. In response to the camera being separate from the main body of the display apparatus 100, the image acquisition unit 140 may perform communication with the main body of the display apparatus 100 in a wired or wireless manner.

The image acquisition unit 140 may include a lens configured to transmit an image and an image sensor 141 configured to sense the image transmitted through the lens. The image sensor 141 may be implemented with a charge-coupled device (CCD) image sensor or a complementary metal oxide semiconductor (CMOS) image sensor. The image input through the image acquisition unit 140 may be processed in the image processor 110.

The storage unit 150 may store information according to control of the controller 170. The storage unit 150 may include a nonvolatile memory, a volatile memory, a flash memory, a hard disc drive (HDD), a solid state drive (SSD), and the like. The storage unit 150 may be accessed by the controller 170, and may be subjected to read, record, correction, deletion, and update of data by the controller 170.

For example, the data stored in the storage unit 150 may include an operating system for driving the display apparatus 100 as well as various applications executable on the operating system, image data, additional data, and the like.

Specifically, the storage unit 150 may store a signal or data input and output in response to operations of the configuration components according to control of the controller 170. The storage unit 150 may store control program for control of the display apparatus 100, a graphical user interface (GUI) provided from a manufacturer or related to an application downloaded from the outside, images for providing GUIs, user information, text, databases, pieces of related data, and the like.

The term "storage unit" in an exemplary embodiment may include the storage unit 150, a read only memory (ROM) and a random access memory (RAM) in the controller 170, a memory card (for example, a micro secure digital (SD) card or a memory stick) mounted on the display apparatus 100, and the like.

The communication unit 160 may perform communication with other apparatuses. In an exemplary embodiment, the communication unit 160 may support at least one of communication interfaces 1 to N such as WiFi, Bluetooth, RF, Zigbee, WLAN, IR communication, ultra wideband (UWB), or near field communication (NFC).

The communication unit 160 may be built into the main body of the display apparatus 100. The communication unit 160 may be implemented in a dongle or module type to be attachable and detachable to and from a connector of the display apparatus 100.

The controller 170 may perform a control operation for various components of the display apparatus 100. For example, the controller 170 may control an overall operation of the display apparatus 100 by performing a control operation or the like corresponding to the image-processing performed in the image processor 110 and the input signal received in the user input unit 130. The controller 170 may be implemented in a form in which software is combined with a central processing unit (CPU).

The controller 170 may control an overall operation of the display apparatus 100 and signal flow between the internal components 110 to 160 of the display apparatus 100, and perform a data-processing function. The controller 170 may control power to the internal components 110 to 160 from a power supply. In response to an input of the user or a preset stored condition being satisfied, the controller 170 may execute an operating system and various applications stored in the storage unit 150.

While the display 120 displays an indicator in a border of a display region, the controller 170 may control the display 120 to move the indicator along the border and stop the movement of the indicator in a predetermined position of the border in response to a signal for changing a state of the display apparatus. As another example, while the display 120 displays image content in the display region, the controller 170 may acquire information related to the image content and control the display 120 to display the indicator in a position corresponding to the acquired information in the border of the display region. As another example, while the display 120 displays the image content in the display region, the controller 170 may control the display 120 to display additional information in the display region, and to display the indicator in a position corresponding to the additional information in the border of the display region.

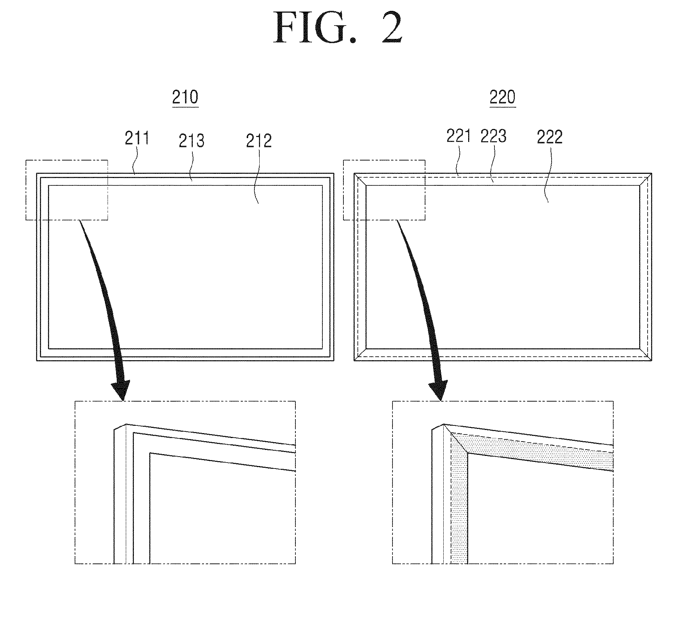

FIG. 2 is a diagram illustrating a border of a display region close to a bezel according to an exemplary embodiment.

Referring to 210 in FIG. 2, a display region 212 may include a border 213 next to a bezel 211. According to an exemplary embodiment, the display apparatus 100 may display an indicator for indicating a state of the display apparatus, which moves along the border. As an example, the indicator may be a line of which a length is changed while the indicator is moved. In response to the border 213 next to the bezel 211 being used as a region for indicating the state of the display apparatus 100 in the state in which an existing physical bezel 211 exists, the user may feel as if another bezel exists in addition to the physical bezel 211. Thus, the user may continue to concentrate on viewing the image content.

In another exemplary embodiment, referring to 220 in FIG. 2, a display region 222 may include a border 223 next to a bezel 221. The border 223 next to the bezel 221 may be covered with a transparent or semitransparent bezel. According to an exemplary embodiment, the transparent or semitransparent bezel may be integrated with the existing physical bezel 211 or separate from the existing physical bezel 211. As an example, the integrated form may be mechanically formed in such a manner that parts of the bezel have different transparency from each other through a single process, or the integrated form may be provided in a form that the entire physical bezel 221 is transparent or semitransparent.

In response to the border 223 of the display region close to the bezel 221 being covered with a semitransparent or transparent bezel, the display apparatus 100 may provide an indicator for indicating a state of the display apparatus 100 below the semitransparent or transparent bezel. The user may feel as if the indicator is provided in the bezel itself.

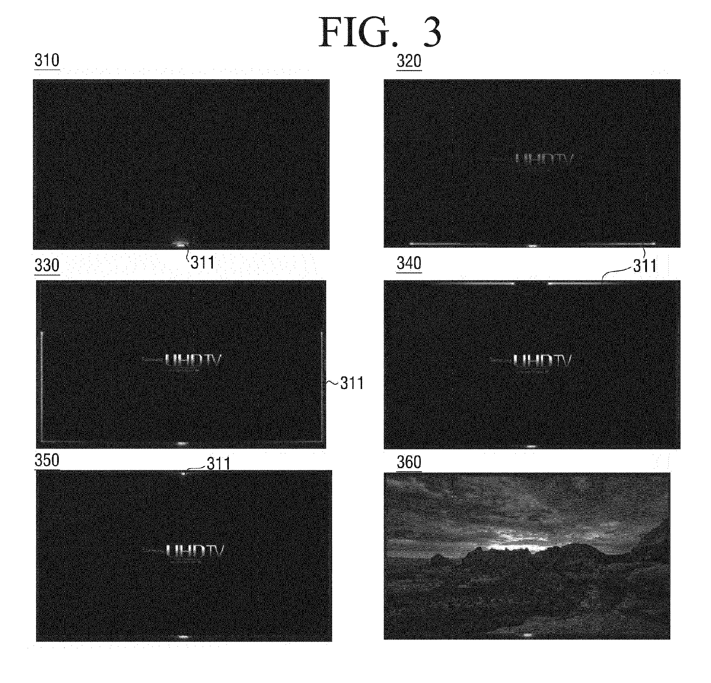

Hereinafter, methods of displaying an indicator in a border of a display region according to one or more exemplary embodiments will be described with reference to FIGS. 3 to 21.

In an exemplary embodiment, the controller 170 may control the display 120 to display an indicator by moving the indicator along the border of the display region in response to a signal for changing a state of the display apparatus 100. The controller 170 may stop the movement of the indicator in a predetermined position of the border of the display region. According to an exemplary embodiment, at least one of a length, width, and color of the indicator may be changed while the indicator is moved.

Referring to FIG. 3, the controller 170 may receive a signal for changing an off state of the display apparatus 100 to an on state. The signal for changing the off state to the on state may be, for example, a signal generated in the user input unit 130 in response to a remote controller operation signal of the user for turning on the display apparatus 100. As illustrated in 310 of FIG. 3, the controller 170 may control the display 120 so that an indicator 311 for indicating the on state starts to move in a predetermined position of a border of a display region. As illustrated in 320 to 350 of FIG. 3, which represent a sequence of screen displays, the controller 170 may control the display 120 to move the indicator 311 along the border of the display region. The controller 170 may control the display 120 to move the indicator 311 faster in a longitudinal side of the display region than in a lateral side thereof, or vice versa. In 350 of FIG. 3, in response to the indicator 311 for indicating the on state being reached in a predetermined position of the border of the display region, the controller 170 may control the display 120 to stop the movement of the indicator 311. In 360 of FIG. 3, the controller 170 may control the display 120 to display image content in the display region as a result of the state change of the display apparatus 100 to the on state.

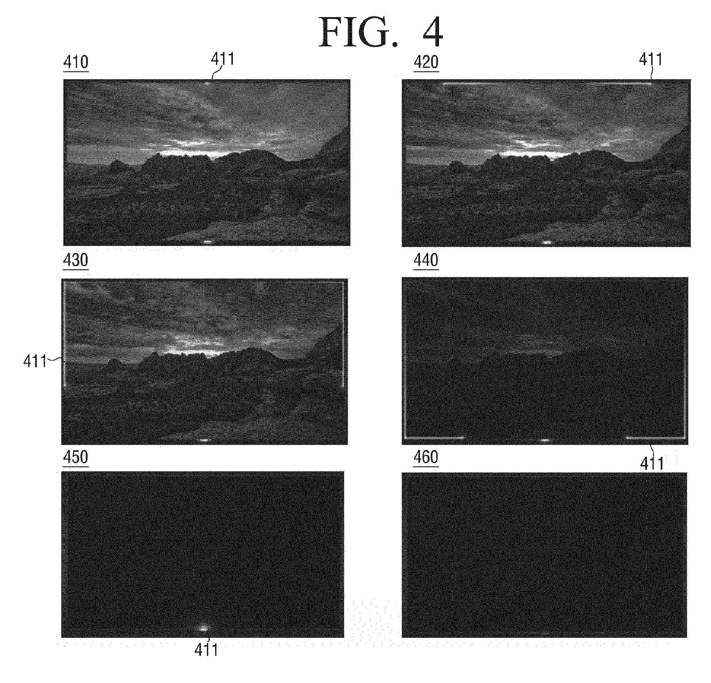

Referring to FIG. 4, the controller 170 may receive a signal for changing an on state of the display apparatus 100 to an off state. The signal for changing the on state to the off state may be, for example, a signal generated in the user input unit 130 in response to a remote controller operation signal of the user for turning off the display apparatus 100 while image content is displayed. As illustrated in 410 of FIG. 4, the controller 170 may control the display 120 so that an indicator 411 for indicating the off state starts to move in a predetermined position of a border of a display region. As illustrated in 420 to 450 of FIG. 4, which represent a sequence of screen displays, the controller 170 may control the display 120 to move the indicator 411 along the border of the display region. The controller 170 may control the display 120 to move the indicator 411 faster in a longitudinal side (e.g. the left or right sides, or along the height) of the display region than in a lateral side (e.g. the top and bottom sides, or across the width) thereof, or vice versa. In 450 of FIG. 4, in response to the indicator 411 reaching a predetermined position of the border of the display region, the controller 170 may control the display 120 to stop the movement of the indicator 411. In 460 of FIG. 4, the controller 170 may control the display 120 not to display the image content in the display region as a result of the state change of the display apparatus 100 to the off state.

In another exemplary embodiment, the display 120 may display image content in a display region. While the image content is displayed, the controller 170 may control the display 120 to display additional information in the display region. The additional information may be, for example, a text message, a social network service (SNS) message, an alarm message, a widget, and the like. While the image content is displayed, the controller may control the display 120 to display the indicator in a position corresponding to the additional information in the border of the display region.

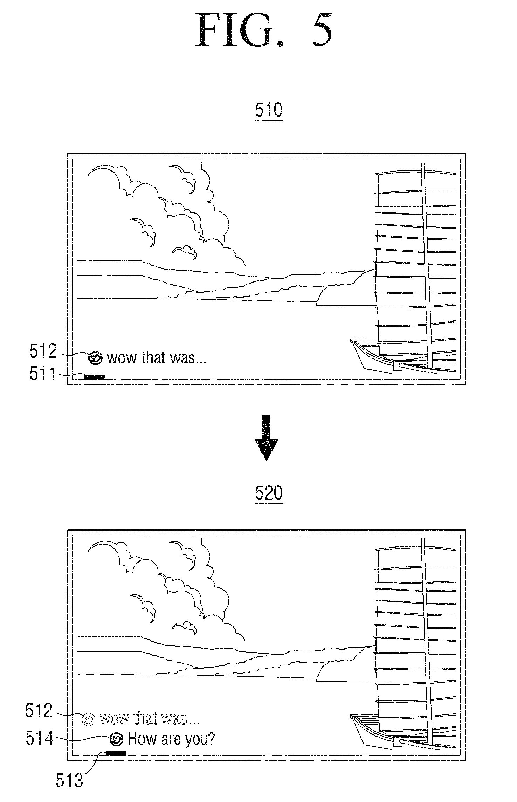

Referring to 510 of FIG. 5, while the display 120 displays image content, the controller 170 may control the display 120 to display a SNS message 512 as additional information in a display region. The controller 170 may control the display 120 to display an indicator 511 in a position corresponding to the SNS message 512 in a border of the display region. As an example, the position corresponding to the SNS message 512 in the border of the display region may be a position of the border closest to the displayed additional information. As another example, the position of the border of the display region corresponding to the SNS message 512 may be a position of the border of the display region located the shortest distance from the center of an icon for the SNS message to a vertical direction. In this example, the SNS message 512 may be displayed to repeatedly flicker for a certain amount of time (e.g., 4 to 5 seconds).

Referring to 520 of FIG. 5, while the SNS message 512 is displayed, the controller 170 may control the display 120 to display another SNS message 514 in the display region. The controller 170 may control the display 120 to display an indicator 513 in a position corresponding to the other message 514 in the border of the display region. The indicator 511 corresponding to the previously displayed SNS message 512 need not be displayed.

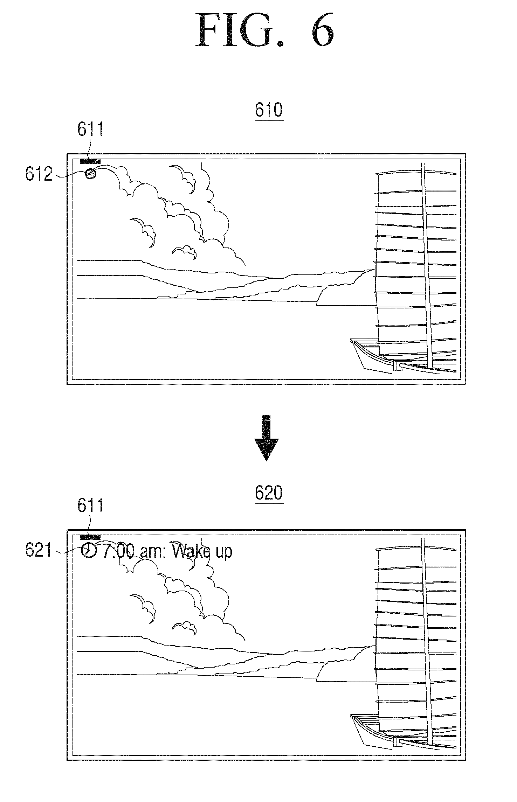

Referring to 610 of FIG. 6, while the display 120 displays image content, the controller 170 may control the display 120 to display an indicator 611 in a border of a display region. The controller 170 may control the display 120 to display another indicator 612 for indicating a position in which additional information is to be displayed in the display region.

Referring to 620 of FIG. 6, the controller 170 may control the display 120 to display an alarm message 621 in the position in which the other indicator 612 is displayed. As an example, the alarm message 621 may be a message in which work to be done by the user at a certain time is recorded. In this example, the controller 170 may control the display 120 to continuously display the indicator 611 in the border of the display region.

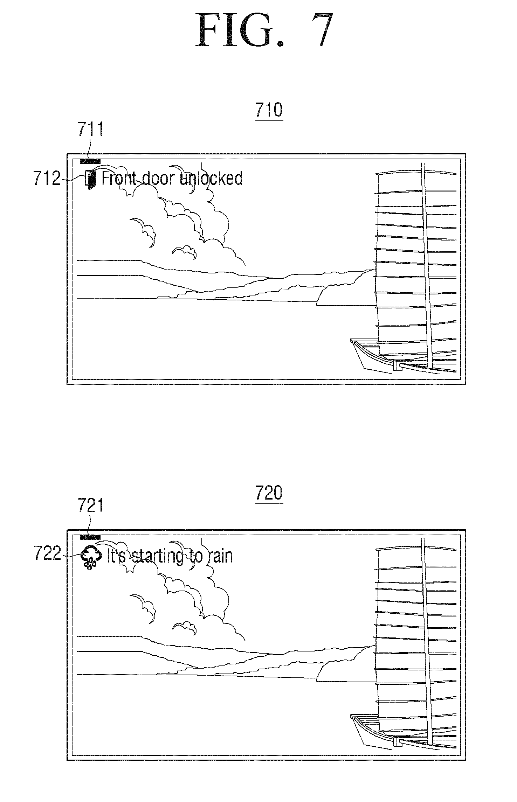

Referring to 710 of FIG. 7, while the display 120 displays image content, the controller 170 may control the display 120 to display an alarm message 712 as additional information in a display region. As an example, the message may be a message provided in a situation (e.g., a situation in which the front door in the house is unlocked) in which the problem in the security of the house occurs. In this example, the controller 170 may control the display 120 to display the indicator 711 in a position corresponding to the alarm message 712 in the border of the display region. As an example, the position corresponding to the alarm message 712 in the border of the display region may be a position of the border closest to the alarm message 712.

Referring to 720 of FIG. 7, while the display 120 displays the image content, the controller 170 may control the display 120 to display a weather message 722 in the display region as additional information. As an example, the weather information 722 may be weather of an area in which the user is currently located or weather of a specific area previously registered by the user. In this example, the controller 170 may control the display 120 to display the indicator 721 in a position corresponding to the weather message 722 in the border of the display region. As another example, the position of the indicator 721 corresponding to the weather message 722 in the border of the display region may be a position of the border closest to the weather message 722.

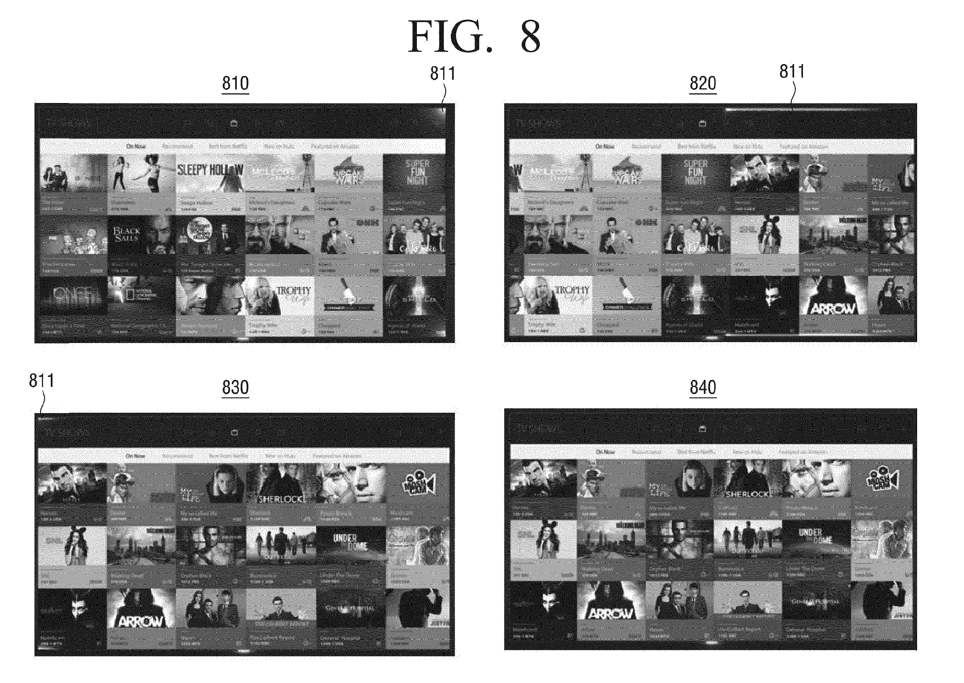

Referring to FIG. 8, illustrating a sequence of screen displays 810 to 840, the controller 170 may receive a signal for changing from a state in which a first screen is displayed to a state in which a second screen is displayed. As an example, the received signal may be a signal generated in the user input unit in response to a user gesture to flick to one direction so as to display the second screen while the first screen is displayed in the display region. As illustrated in 810 of FIG. 8, the controller 170 may control the display 120 so that the indicator 811 starts to move in a border of the display region in response to the received signal. As illustrated in 820 of FIG. 8, the controller 170 may control the display 120 to move the indicator 811 along the border of the display region. The moving direction of the indicator 811 may be the same as the flick direction of the user gesture. As an example, in response to the user gesture being flicking from right to left, the indicator 811 may move from right to left. In 830 of FIG. 8, the controller 170 may control the display 120 to stop the movement of the indicator 811 in a predetermined position of the border of the display region. In 840 of FIG. 4, the controller 170 may control the display 120 to display the second screen in the display region as a result of the state change of the display apparatus 100.

In another exemplary embodiment, the display 120 may display an indicator in a border of a display region. While the indicator is displayed, the controller 170 may control the display 120 to display the indicator by moving the indicator along the border of the display in response to the signal for changing the state of the display apparatus. The controller 170 may control the display 120 to stop the movement of the indicator in a predetermined position of the border of the display region. At least one of a length, width, and color of the indicator may be changed while the indicator is moved. As an example, in response to the indicator being a line, a length of the line may be changed while the line is moved.

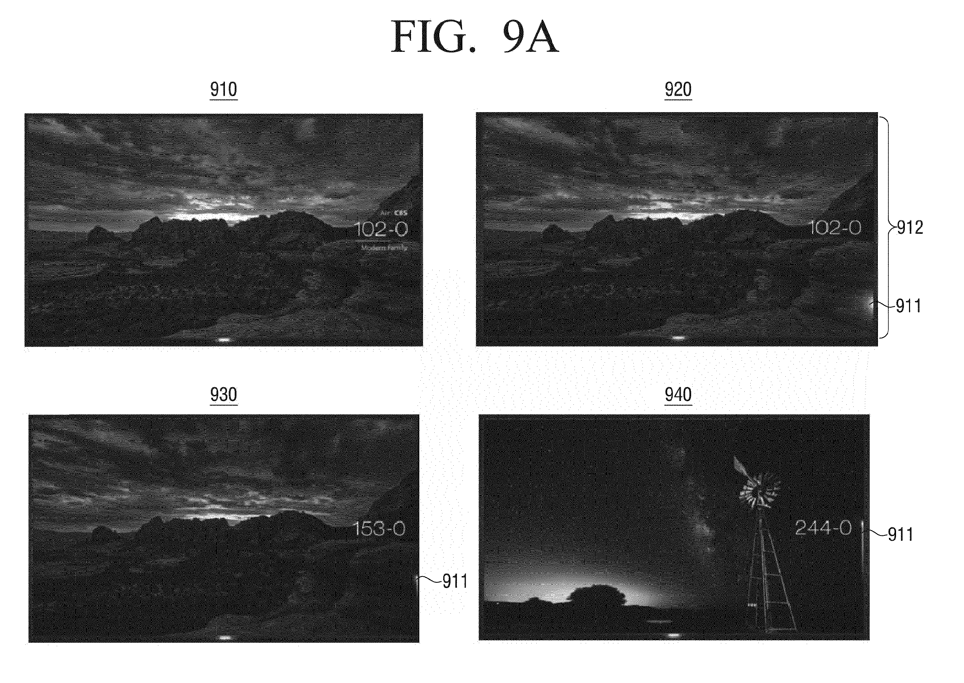

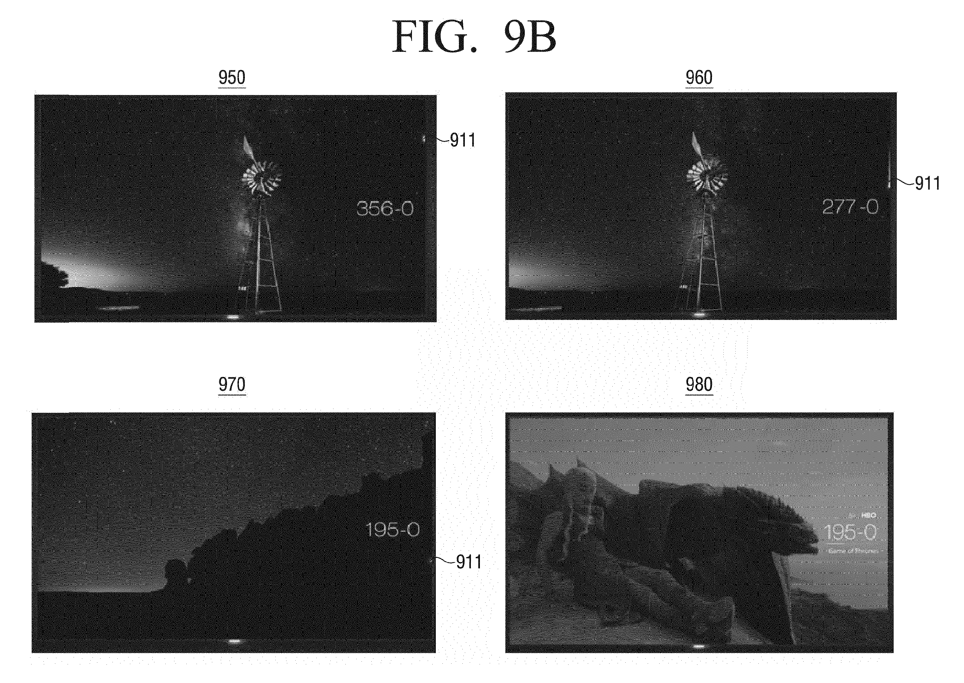

As illustrated in 910 of FIG. 9A, while the display 120 displays broadcast content for a first channel, the controller 170 may receive a signal for changing the first channel to another channel. The received signal may be a signal generated in the user input unit 130 in response to a remote controller operation signal of the user for a channel change. As illustrated in 920 of FIG. 9A, the controller 170 may control the display 120 to display an indicator 911 in a predetermined position of a border of a display region in response to the received signal. The signal for changing the first channel to other channel may be a signal generated in the user input unit 130 in response to a user requesting a channel change using the remote controller. As an example, the predetermined position may be a position at a point in length 912 that represents approximately where the first channel sits compared to the total number of channels provided by the controller 170. For example, if channel 100 is the first channel and the controller provides 500 total channels, the position of the indicator would be approximately 1/5 up the range of length 912. As an example, in response to a remote controller operation signal of the user in which the user successively presses a channel-up button, the controller 170 may control the display 120 to display the indicator 911 by moving the indicator upwards along the border of the display region as illustrated in 930 and 940 of FIG. 9A and 950 of FIG. 9B. In this example, a length of the indicator 911 may be increased along the border of the display region.

As another example, in response to a remote controller operation signal of the user in which the user successively presses a channel-down button, the controller 170 may control the display 120 to display the indicator 911 by moving the indicator downwards along the border of the display region as illustrated in 960 and 970 of FIG. 9B. In this example, the length of the indicator 911 may be reduced along the border of the display region.

As another example, in response to a remote controller operation signal of the user not being received for a predetermined time (e.g., 1 second to 1.5 seconds, but not limited to this), as illustrated in 980 of FIG. 9B, the controller 170 may control the display 120 to stop displaying the indicator 911 and to display broadcast content for a second channel.

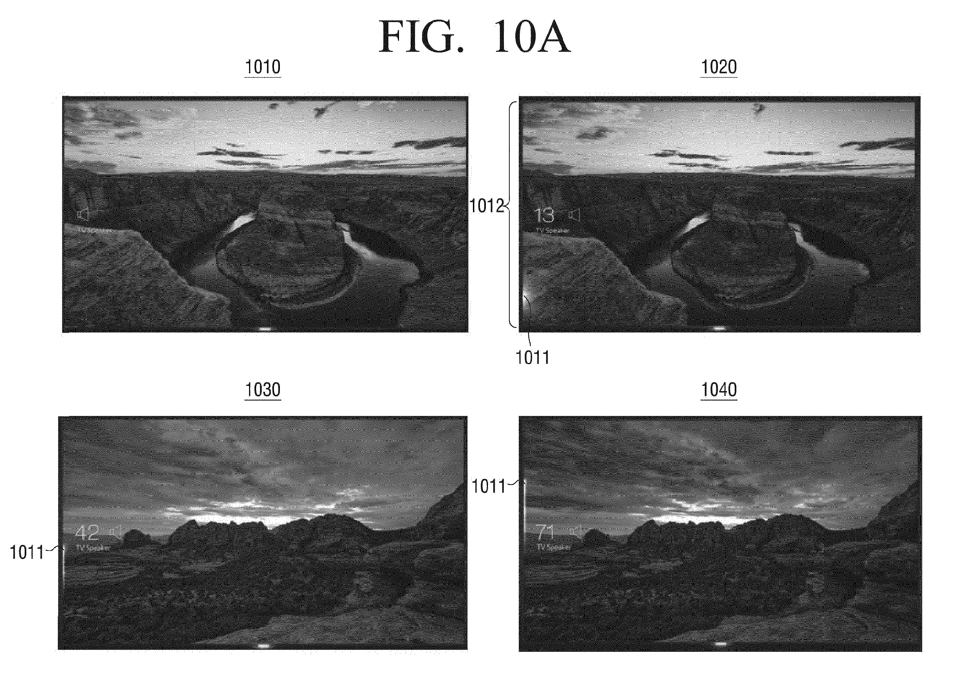

Referring to 1010 of FIG. 10A, while the display 120 outputs a first volume, the controller may receive a signal for changing the first volume to another volume. The received signal may be a signal generated in the user input unit 130 in response to a remote controller operation signal of the user for a volume change. Referring to 1020 of FIG. 10A, the controller 170 may control the display 120 to display an indicator 1011 in a predetermined position of a border of a display region in response to the signal for changing the first volume to other volume. As an example, the predetermined position may be a position at a point in length 1012 that represents approximately where the first volume sits compared to the total volume provided by the controller 170. For example, if volume 10 is the first level and the controller provides 100 levels in total, the position of the indicator would be approximately 1/10 up the range of length 1012.

As another example, in response to a remote controller operation signal of the user in which the user successively presses a volume-up button, as illustrated in 1030 and 1040 of FIG. 10A, the controller 170 may control the display 120 to display the indicator 1011 by moving the indicator upwards along the border of the display region. In this example, a length of the indicator 1011 may be increased along the border of the display region.

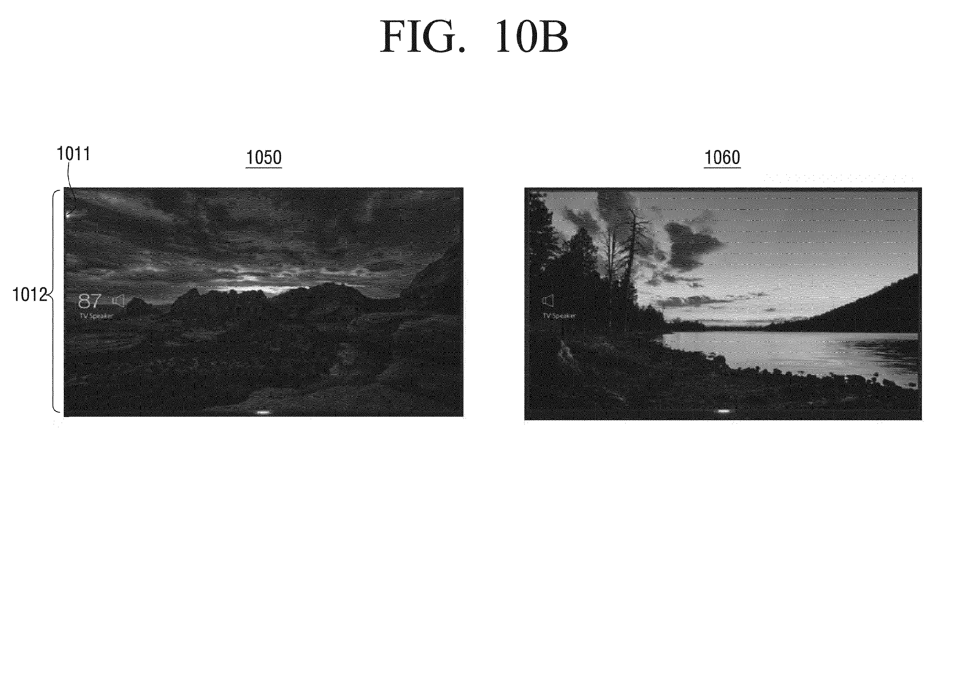

As another example, in response to the remote controller operation signal of the user not being received for a predetermined period of time, as illustrated in 1050 of FIG. 10B, the controller 170 may control the display 120 to stop the movement of the indicator 1011 in a predetermined position of the border of the display region. As an example, the predetermined position may be a position corresponding to a second volume in the length 1012 of the border of the display region, where the total length 1012 corresponds to the total volume outputtable in the controller 170. In response to the remote controller operation signal of the user not being received for a predetermined time (e.g., 1 second to 1.5 seconds, but not limited to this), As illustrated in 1060 of FIG. 10B, the controller 170 may control the display 120 to stop the display of the indicator 1011 and output the changed second volume.

In another exemplary embodiment, the display 120 may display image content in a display region. While the image content is displayed, the controller 170 may acquire information related to the image content. The controller 170 may control the display 120 to display an indicator in a position corresponding to the acquired information in a border of a display region.

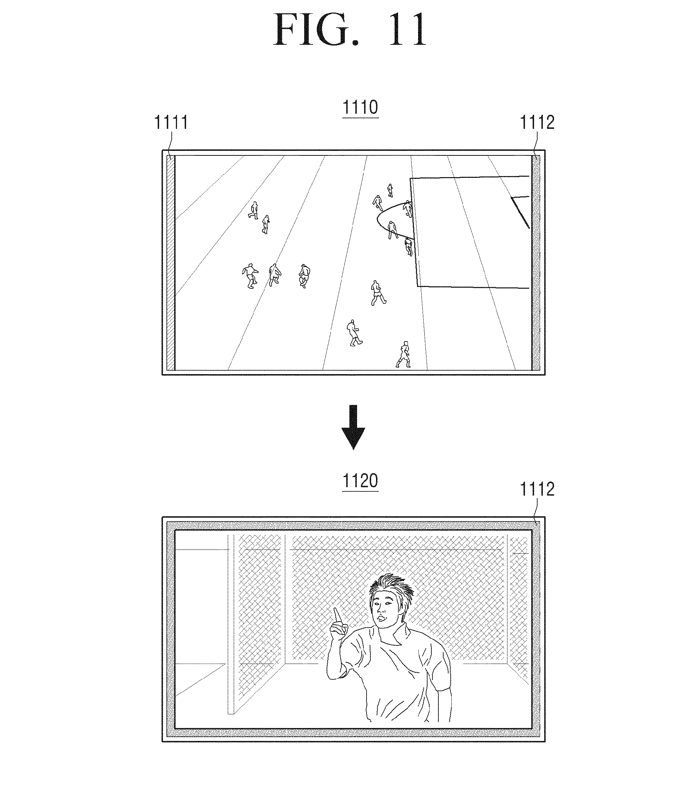

As illustrated in 1110 of FIG. 11, the display 120 may display image content in a display region. As an example, the image content may be a sports event played between teams. While the display 120 displays the image content, the controller 170 may acquire information related to the side or area in which a team is located. The controller 170 may control the display 120 to display at least one indicator 1111 and/or 1112 located in predetermined positions corresponding to the teams in a border of the display region. As another example, the controller 170 may control the display 120 to display the white indicator 1111 in the border corresponding to the side or area in which a team wearing a white uniform is located. As another example, the controller 170 may control the display 120 to display the blue indicator 1112 in the border corresponding to the side or area in which a team wearing a blue uniform is located.

In 1120 of FIG. 11, in response to a goal being scored by one of the teams, the controller 170 may acquire information related to the team scoring the goal. The controller 170 may control the display 120 to display the entire border of the display region with the color of the indicator 1112 corresponding to the team scoring the goal. However, the invention is not limited to any particular sport. The concepts can be applied to any other sport, e.g., baseball, football, tennis, etc.

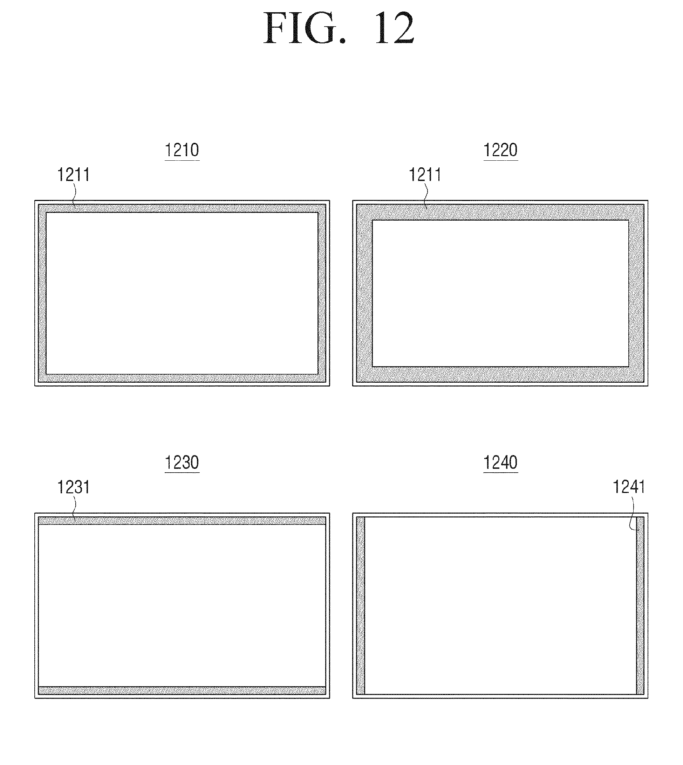

As illustrated in 1210 of FIG. 12, the display 120 may display an indicator 1211 in an entire border of a display region. While the indicator 1211 is displayed, the controller 170 may receive a signal for increasing a width of the indicator 1211. As an example, the signal for increasing the width of the indicator 1211 may be a signal generated in the user input unit 130 in response to the remote controller operation signal of the user. As illustrated in 1220 of FIG. 12, the controller 170 may display the width-widened indicator 1211 on the display region in response to the signal for increasing the width of the indicator 1211.

As illustrated in 1230 of FIG. 12, the display 120 may display an indicator 1231 in the longer sides of the border of the display region. While the indicator 1231 is displayed, the controller 170 may receive a signal for changing a position of the indicator 1231 in the border of the display region. As illustrated in 1240 of FIG. 12, the controller 170 may control the display 120 to display an indicator 1241 in the shorter sides of the border of the display region.

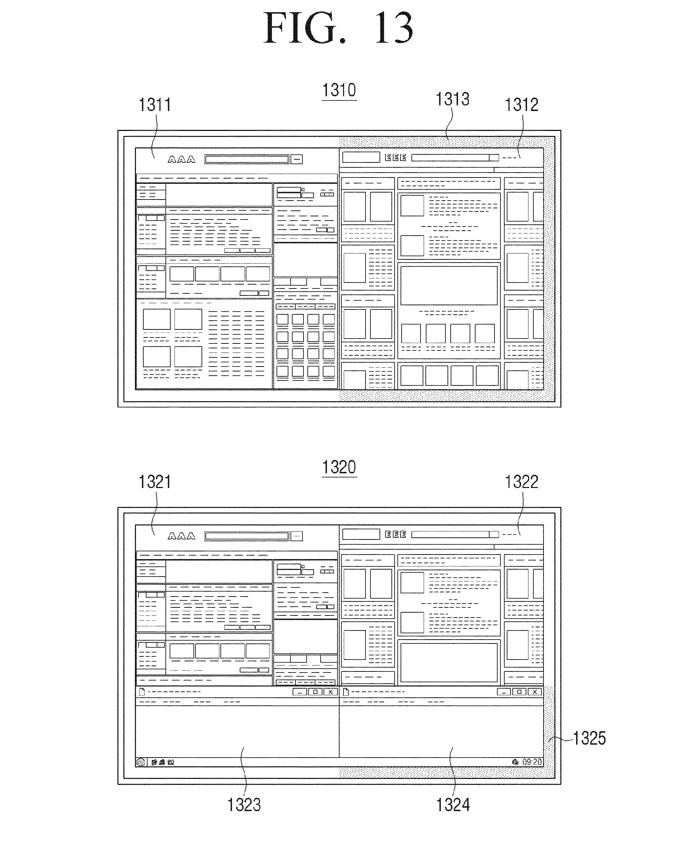

As illustrated in FIG. 13, the display 120 may display image content on a display region. As an example, in response to a plurality of pieces of image content being displayed, one piece of image content among the plurality of pieces of image content may be focused by the user. In this example, the controller 170 may acquire information for a display position of the focused image content. The controller 170 may control the display 120 to display an indicator in a border of the display region around the focused image content.

As an example, referring to 1310 of FIG. 13, one piece of image content 1312 among a plurality of pieces of image content 1311 and 1312 may be focused by the user. In this example, the controller 170 may acquire information for a display position of the focused image content 1312. The controller 170 may control the display 120 to display an indicator 1313 in three sides corresponding to the one piece of image content 1312 in the border of the display region. As another example, referring to 1320 of FIG. 13, in response to one piece of image content 1324 among a plurality of pieces of image content 1321, 1322, 1323, and 1324 being focused, the controller 170 may control the display 120 to display an indicator 1325 in two sides of the display having a position corresponding to the one piece of image content 1324 in the border of the display region.

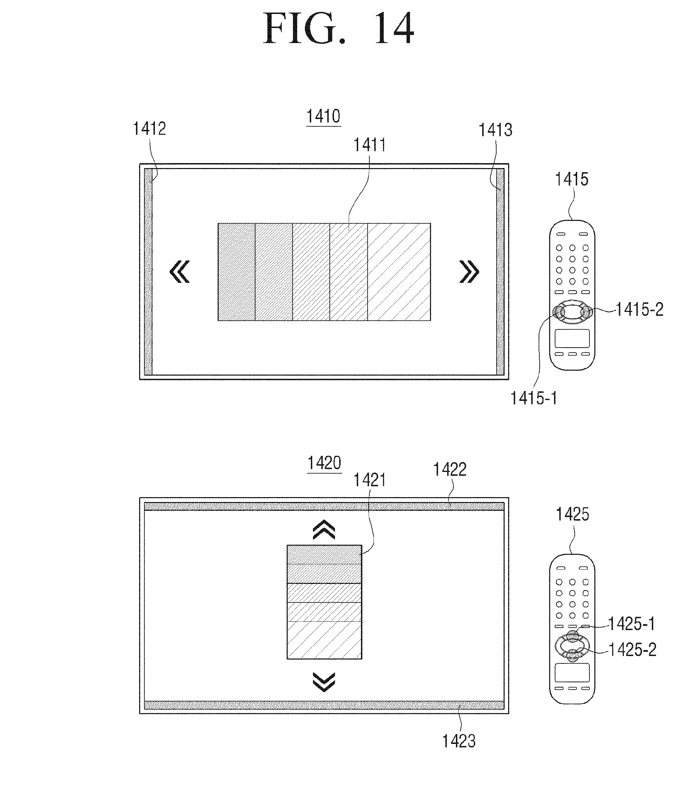

As illustrated in FIG. 14, the display 120 may display a menu which may enable search at least one direction among up, down, left and right directions in a display region. In this state, the controller 170 may control the display 120 to display an indicator in a border of the display region corresponding to the user's movable direction through the menu.

As an example, as illustrated in 1410 of FIG. 14, in response to a menu searching direction, which may be searched through a displayed menu 1411, being the left or right direction, the controller 170 may control the display 120 to display an indicator 1412 or 1413 in the border of the display region corresponding to the left or right direction. In this example, the user may select a left button 1415-1 or a right button 1415-2 of a remote controller 1415 to search for the menu to the right or left direction.

As another example, as illustrated in 1420 of FIG. 14, in response to a menu searching direction which is searched for through a displayed menu 1421 being the up or down direction, the controller 170 may control the display 120 to display an indicator 1422 or 1423 in the border of the display region corresponding to the up or down direction. In this example, the user may select an up button 1425-1 or a down button 1425-2 of a remote controller 1425 to search for the menu in the up or down direction.

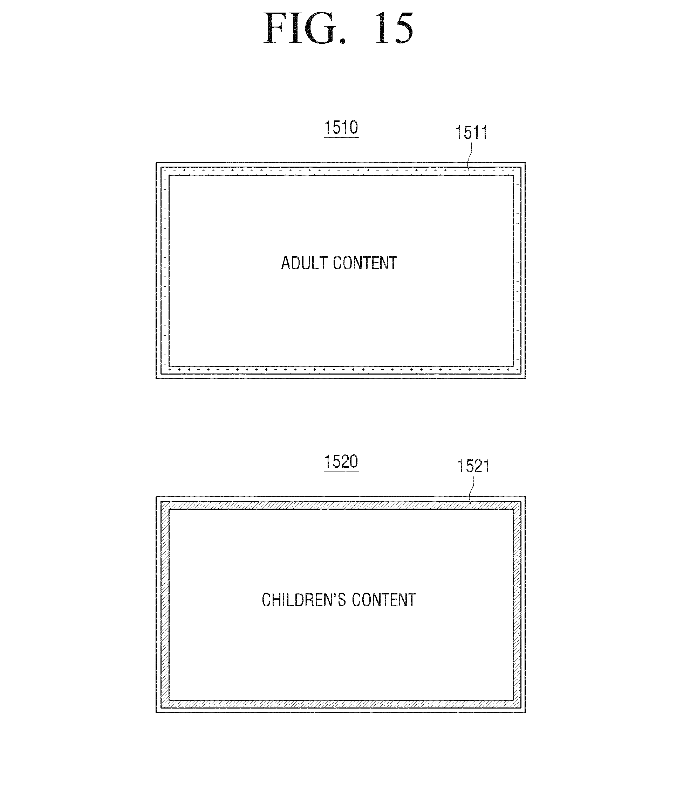

As illustrated in FIG. 15, the controller 170 may acquire information for the kind of image content provided through the display 120 or a viewing age limit for the image content. The controller 170 may control the display 120 to display an indicator in a border of a display region in consideration of the kind of image content or the viewing age limit for the image content.

As an example, as illustrated in 1510 of FIG. 15, in response to the kind of image content provided through the display 120 being adult content, the controller 170 may control the display 120 to display a red indicator 1511 in the border of the display region. As another example, as illustrated in 1520 of FIG. 15, in response to the kind of image content provided through the display 120 being children's content, the controller 170 may control the display 120 to display a green indicator 1521 in the border of the display region.

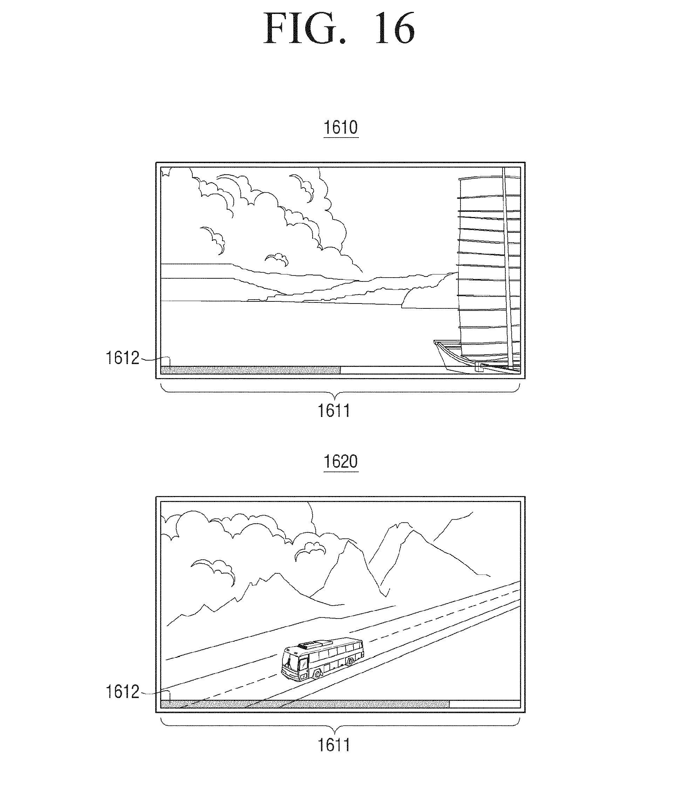

As illustrated in FIG. 16, the display 120 may display image content on a display region. While the image content is displayed, the controller 170 may control the display 120 to display an indicator for indicating a reproduction time of the image content in a border of a display region.

As an example, referring to 1610 of FIG. 16, in response to a total reproduction time of the image content corresponding to a certain length 1611 of the border of the display region, the controller 170 may control the display 120 to display an indicator 1612 up to a position corresponding to the current reproduction time of the image content being reproduced in the certain length 1611. As another example, referring to 1620 of FIG. 16, the controller 120 may control the display 120 to display the indicator 1612 of which a length is increased up to a position corresponding to an elapsed reproduction time of the image content that has elapsed in the certain length 1611.

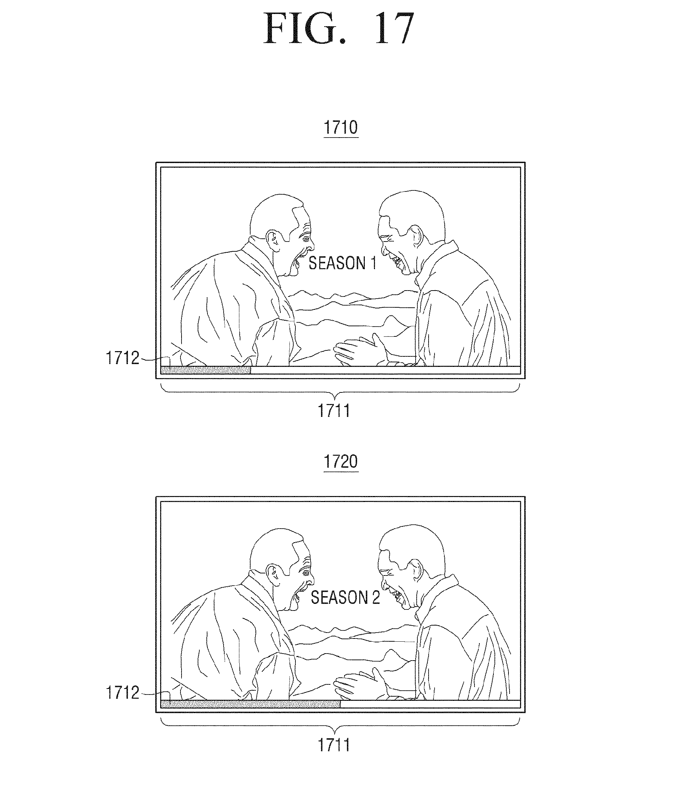

As illustrated in 1710 of FIG. 17, in response to image content displayed being one piece of image content among pieces of image content configured in a series, the controller 170 may control the display 120 to display an indicator for indicating a position of image content being currently reproduced in the series in a border of a display region.

As an example, referring to 1710 of FIG. 17, in response to the total pieces of image content included in the series corresponding to a certain length 1711 of the border, the controller 170 may control the display 120 to display an indicator 1712 up to a position of the image content being reproduced in the certain length 1711. As another example, referring to 1720 of FIG. 17, in response to the image content being displayed being changed to another image content included in the series, the controller 170 may control the display 120 to display the indicator 1712 up to a position of the other image content among pieces of image content being reproduced in the certain length.

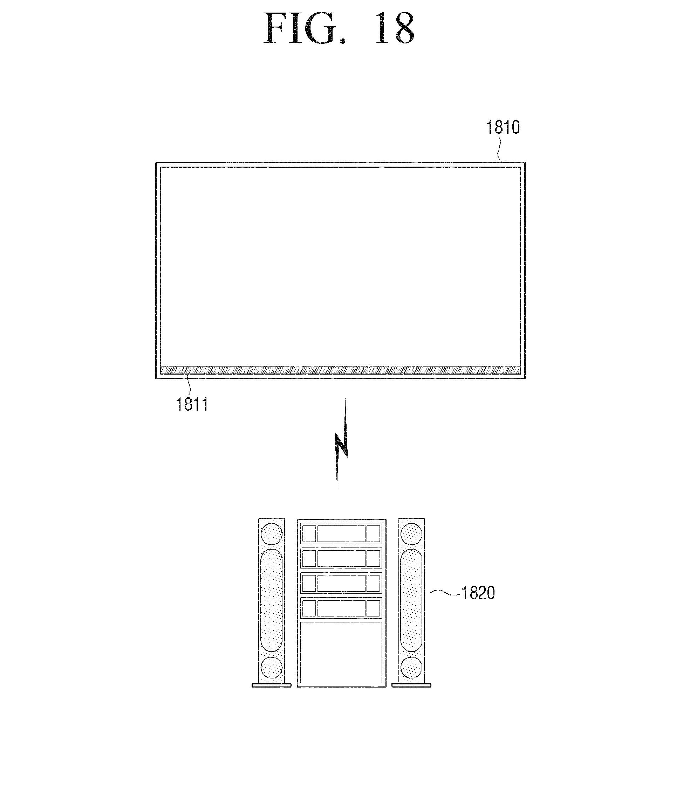

As illustrated in 1810 of FIG. 18, the communication unit 160 of the display apparatus 100 may be coupled to an external apparatus 1820 through a wired or wireless network. As an example, the external apparatus 1820 may include various peripheral apparatuses such as a speaker, a PC, or a set-top box, etc. In the state in which the display apparatus 100 is coupled to the external apparatus 1820, the controller 170 may control the display 120 to display an indicator 1811 for indicating the connection of the display apparatus 100 to the external apparatus 1820 in a border of a display region. The indicator 1811 may be continuously displayed while the display apparatus 100 is coupled to the external apparatus 1820 or the indicator 1811 may be displayed for a predetermined time (for example, for 10 seconds) after the display apparatus 100 is coupled to the external apparatus 1820.

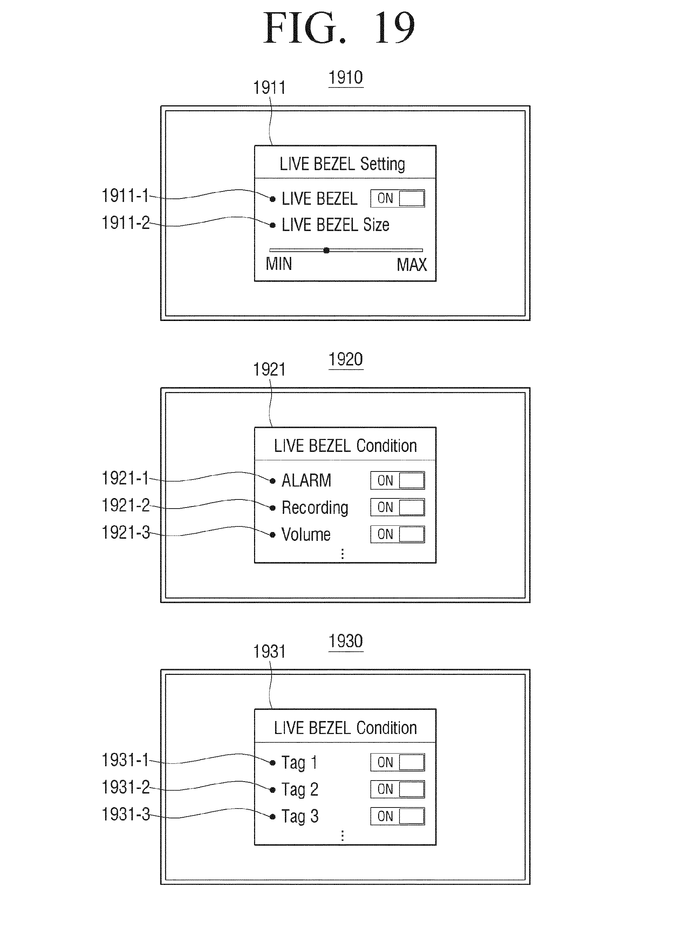

As illustrated in FIG. 19, the controller 170 may control the display 120 to display a menu 1911 which may control a border of a display region. In the state in which the menu 1911 is displayed, the controller 170 may control the border of the display region in response to a menu operation of the user through the user input unit 130.

As an example, in 1910 of FIG. 19, the menu 1911 may include at least one of an item 1911-1 for selecting whether or not to display an indicator in the border of the display region, an item 1911-2 for adjusting a width of the indicator, an item for adjusting brightness of the indicator, and an item for adjusting a color of the indicator. As another example, in 1920 of FIG. 19, a menu 1921 may display items 1921-1, 1921-2, and 1921-3 for selecting conditions that indicators are displayed in the border of the display region. In this example, the menu 1921 may include at least one of the item 1921-1 for selecting whether or not to display an indicator related to an alarm, the item 1921-2 for selecting whether or not to display an indicator related to recording, the item 1921-3 for selecting whether or not to display an indicator related to a volume (not shown), an item for selecting whether or not to display an indicator related to a channel (not shown), an item for selecting whether or not to display an indicator related to a message (not shown), and an item for selecting whether or not to display an indicator for indicating connection with an external apparatus (not shown). As another example, in 1930 of FIG. 19, in response to the display apparatus 100 being linked to tags attached to external objects of the display apparatus and indicators being provided to the display apparatus 100, a menu 1931 may include items 1931-1, 931-2, and 1931-3 for selecting whether or not to display indicators in response to signals being generated from the tags linked to the external objects. In this example, the signals from the tags linked to the external objects may be generated in various situations. For example, signals may be generated in response to an unlock of a door being sensed from a tag attached to the door, a temperature in cooked food being a certain temperature or more, a pet which is out of a certain range or region being sensed, and the like.

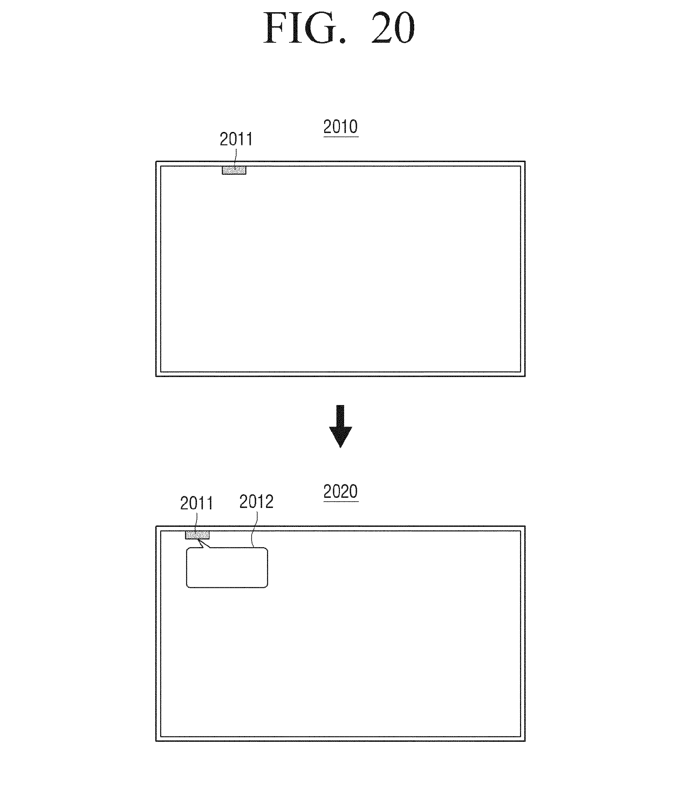

As illustrated in 2010 of FIG. 20, before additional information is displayed in a display region, the controller 170 may control the display 120 to display an indicator 2011 for indicating that the additional information is expected to be displayed in a border of the display region. As illustrated in 2020 of FIG. 20, in response to a user input for requesting the display of the additional information in the state in which the indicator 2011 is displayed, the controller 170 may control the display 120 to display additional information 2012 near the indicator 2011. As an example, the additional information may include various pieces of information such as a text message, a SNS message, a widget, alarm information, or weather information, etc.

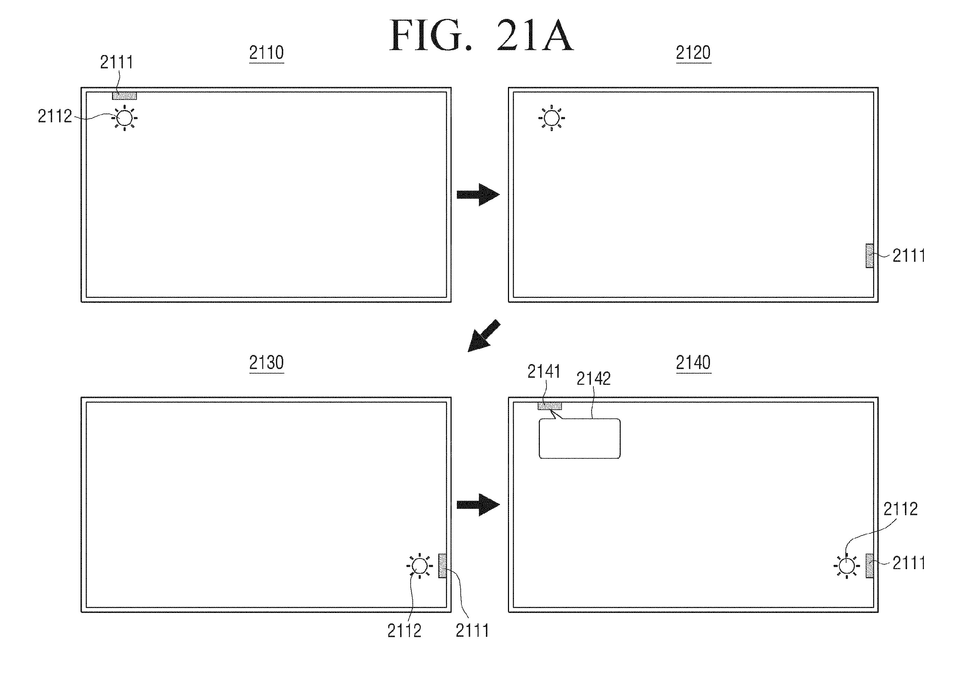

As illustrated in 2110 of FIG. 21A, the display 120 may display first additional information 2112 in a display region and display a first indicator 2111 in a predetermined position of a border of the display region. As an example, as illustrated in 2120 of FIG. 21A, in response to a user input for moving the first indicator 2111 to a specific position of the border of the display region, the controller 170 may move the first indicator 2111 to the specific position. As another example, as illustrated in 2130 of FIG. 21A, in response to a user input for confirming the position of the first indicator 2111, the controller 170 may control the display 120 to display the first additional information 2112 near the moved first indicator 2111.

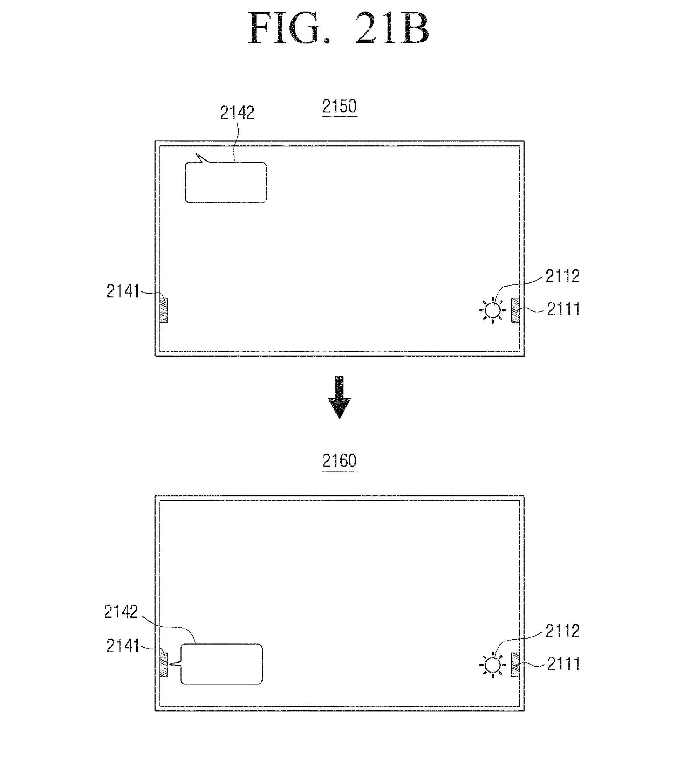

As illustrated in 2140 of FIG. 21A, in the state in which the first additional information and the first indicator 2111 are displayed, the display 120 may display second additional information 2142 in the display region and display a second indicator 2141 in a predetermined position of the border of the display region. As an example, as illustrated in 2150 of FIG. 21B, in response to a user input for moving the second indicator 2141 to a specific position of the border of the display region, the controller 170 may control the display 120 to move the second indicator 2141 to the specific position. As another example, as illustrated in 2160 of FIG. 21B, in response to a user input for confirming the position of the second indicator 2141, the controller 170 may control the display 120 to display the second additional information 2142 near the moved second indicator 2141. In this way, in response to the user operation, the controller 170 may determine positions in which the first additional information and the second additional information are to be displayed using the indicators 2111 and 2141.

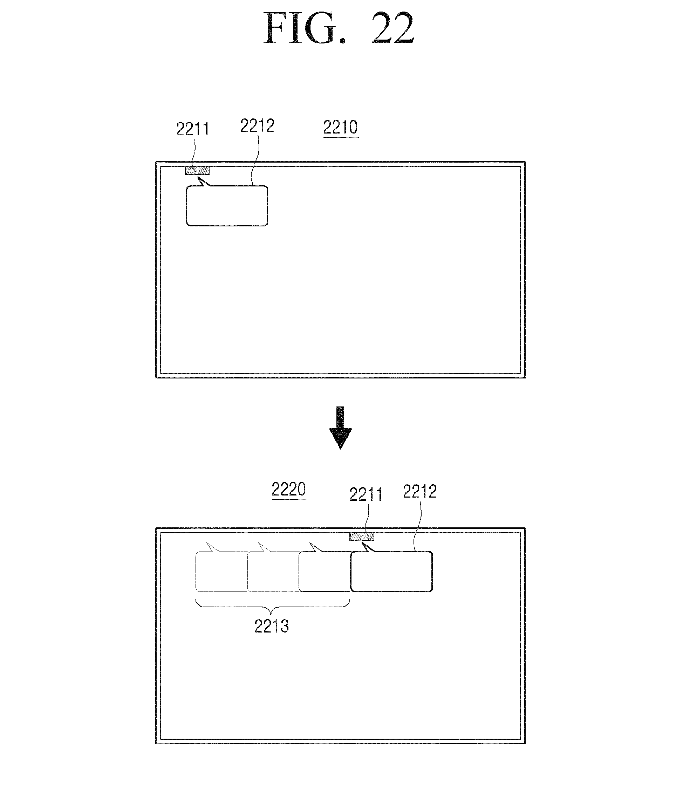

As illustrated in 2210 of FIG. 22, the display 120 may display additional information 2212 in a display region and display an indicator 2211 in a border of the display region. In this state, the user input unit 130 may receive a user input for moving positions of the additional information 2212 and moving the indicator 2211 to other positions in the order of the display region. As illustrated in 2220 of FIG. 22, in response to the user input, the controller 170 may control the display 120 to move the additional information 2212 and the indicator 2211 to specific positions in the border of the display region. While the additional information 2212 and the indicator 2211 are moved, the controller 170 may control the display 120 to display a visual effect 2213 for representing sequential movement of the additional information 2212 and the indicator 2212 in the display region.

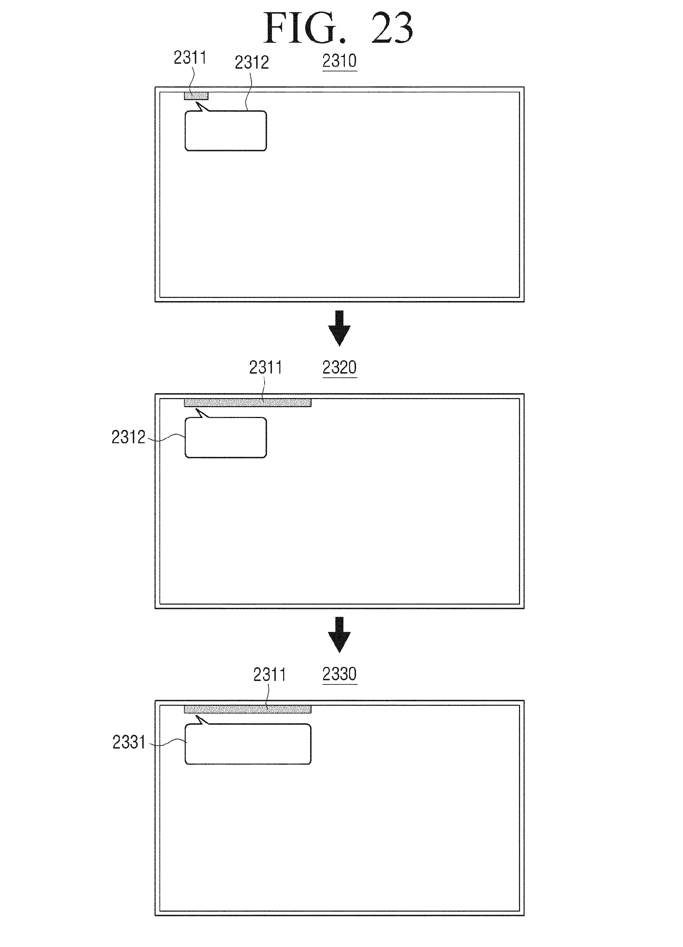

As illustrated in 2310 of FIG. 23, the display 120 may display additional information 2312 in a display region and display an indicator 2311 in a border of the display region. In this state, the user input unit 130 may receive a user input for increasing a length of the indicator. As illustrated in 2320 of FIG. 23, in response to the user input, the controller 170 may control the display 120 to display the length-increased indicator 2311 in the border of the display region. As illustrated in 2330 of FIG. 23, in response to a user input for confirming the length of the indicator, the controller 170 may control the display 120 to display additional information 2331 having a size corresponding to the length of the indicator 2311 in the display region.

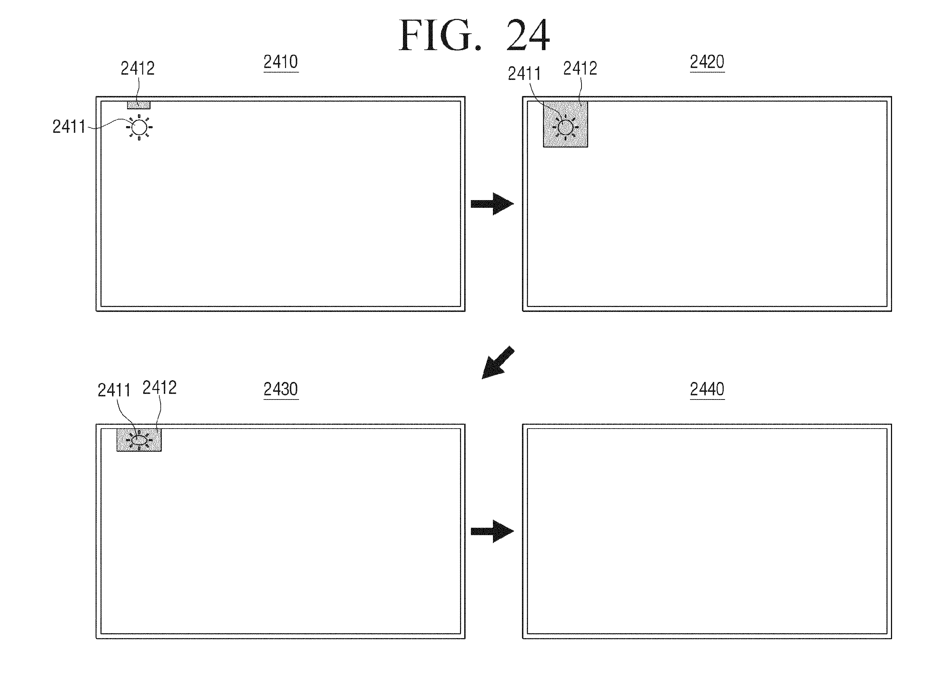

As illustrated in 2410 of FIG. 24, the display 120 may display additional information 2411 in a display region. The display 120 may display an indicator 2412 in a position corresponding to the additional information 2411 in a border of the display region. As an example, as illustrated in 2420 of FIG. 24, in response to a user input for deleting the additional information 2411, the controller 170 may control the display 120 to display the indicator 2412 including the additional information 2411 by expanding the indicator 2412 in the border of the display region. As another example, as illustrated in 2430 of FIG. 24, the controller 170 may control the display 120 to display the indicator 2412 in a form to absorb the additional information 2411 of the display region by gradually reducing the indicator 2412 in the border of the display region. As a result of further reduction of the expanded indicator, as illustrated in 2440 of FIG. 24, the controller 170 may control the display 120 to display indicator 2412 in a form such that the additional information is deleted in the display region.

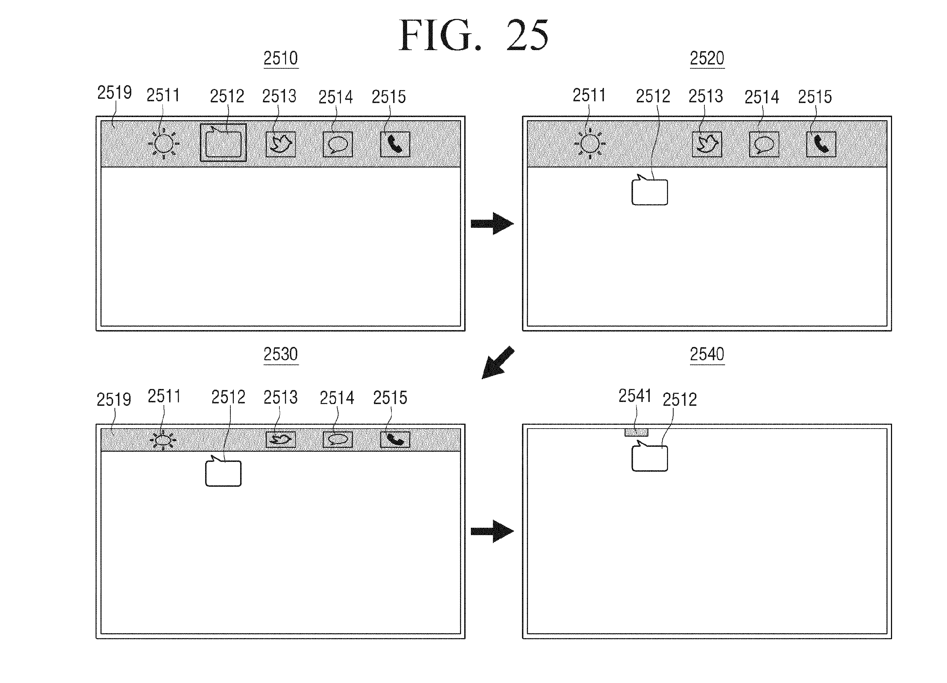

As illustrated in 2510 of FIG. 25, the display 120 may display pieces of additional information or icons 2511 to 2515 related to the pieces of additional information in an indicator 2519 of a border of a display region. In response to a user input for selecting a specific icon 2512 while the icons 2511 to 2515 are displayed, the controller 170 may control the display 120 so that the selected specific icon 2512 is highlighted.

As illustrated in 2520 of FIG. 25, in response to a user input for confirming the display of the highlighted specific icon 2512 or the display of the additional information related to the icon 2512, the controller 170 may control the display 120 to display the specific icon 2512 or the additional information related to the icon 2512. As illustrated in 2530 of FIG. 25, the controller 170 may control the display 120 to display the other icons 2511, 2513, 2514, and 2515 other than the specific icon 2512 in a form to absorb the other icons 2511, 2513, 2514, and 2515 by gradually reducing the indicator 2519 of the border of the display region. As a result of the reduction of the indicator, as illustrated in 2540 of FIG. 25, the controller 170 may control the display 120 to display only the confirmed additional information 2512 and an indicator 2541 corresponding to the additional information 2512 in the display region.

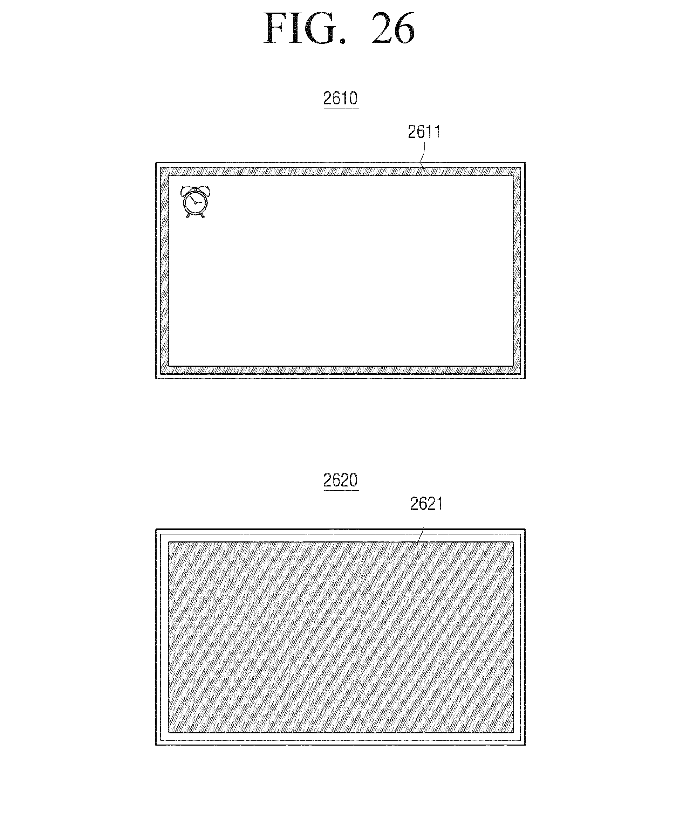

As illustrated in FIG. 26, the controller 170 may control the display 120 such that one of a border of a display region or a region in the display region other than the border of the display region is focused. In this state, in response to a user input for operating a volume of a remote controller, the controller 170 may control a volume of information corresponding to the focused region. As an example, as illustrated in 2610 of FIG. 26, in response to a border 2611 of the display region being focused, the controller 170 may adjust a volume (e.g., alarm sound, message arrival sound, etc.) of additional information in response to the user input. As another example, as illustrated in 2620 of FIG. 26, in response to a region 2621 in the display region other than the border of the display region being focused, the controller 170 may control an amount of image content being reproduced in the display region.

In another exemplary embodiment, in the state in which image content is not displayed in a display region, the controller 170 may provide an indicator to a border of the display region. As an example, the controller 170 may process the display region other than the border of the display region to an off state or a black state. In this example, since only the border of the display region is activated, power consumed in the display apparatus 100 may be minimized.

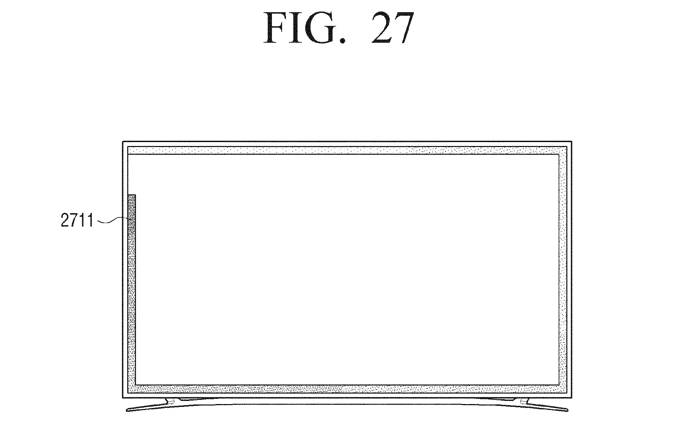

As illustrated in FIG. 27, in the state in which only a border of a display region is activated, the controller 170 may provide an indicator 2711 in the border of the display region. As an example, in response to a preset scheduled viewing time of image content being reached or approached, the controller 170 may provide the indicator 2711 in the border of the display region. In this example, the indicator 2711 may be a line moving along the border of the display region.

In another exemplary embodiment, in the state in which the schedule is set in advance by the user through an application, in response to the time related to the preset schedule being reached or approached, the controller 170 may provide an indicator to a border of a display region. As an example, the controller 170 may adjust a flickering speed of the indicator in the border of the display region according to the urgency of the preset schedule.

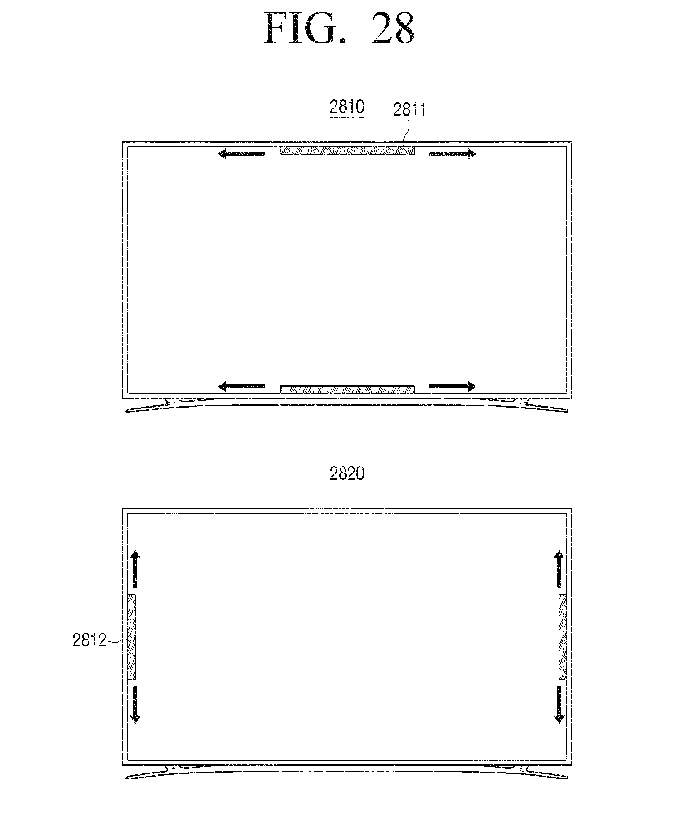

In another exemplary embodiment, in response to image content being transmitted from another party or a signal for requesting a video call being received from another party, the controller 170 may provide an indicator to a border of a display region. As an example, referring to 2810 of FIG. 28, the controller 170 may control the display 120 to laterally move an indicator 2811 along a lateral side of the border. As another example, referring to 2820 of FIG. 28, the controller 170 may control the display 120 to vertically move an indicator 2812 along a longitudinal side of the border.

In another exemplary embodiment, the controller 170 may determine whether or not image content to be reproduced is the user's favorite image content. As an example, the user's favorite image content may be registered in advance or may be determined by analyzing the image content to be reproduced using an application related to the image content. The controller 170 may control the display 120 to display an indicator in a border of a display region in response to the user's favorite image content being expected to be reproduced. As another example, the controller 170 may control the display 120 to display a line moving along the border of the display region. The moving line may be displayed with different colors according to the kinds of user's favorite image content.

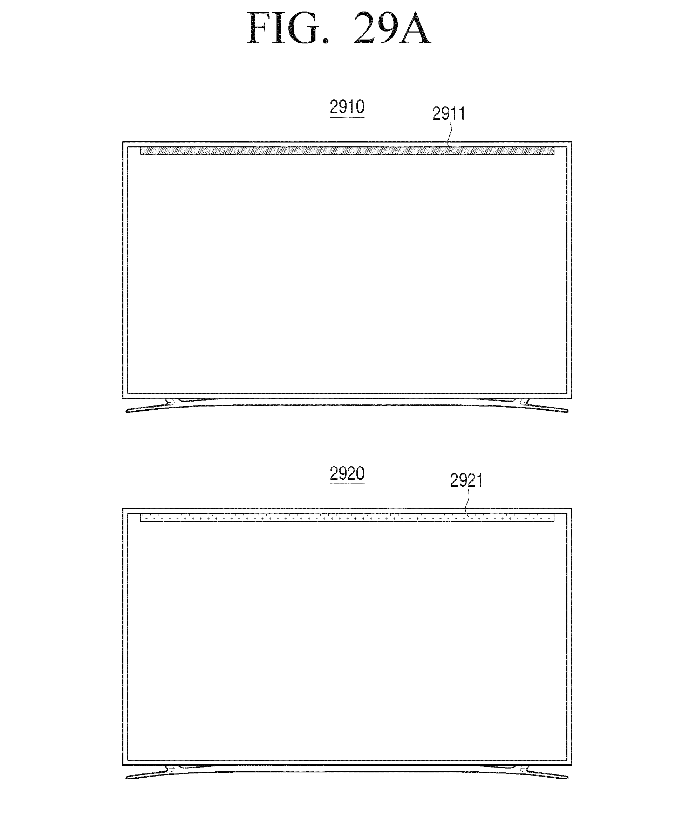

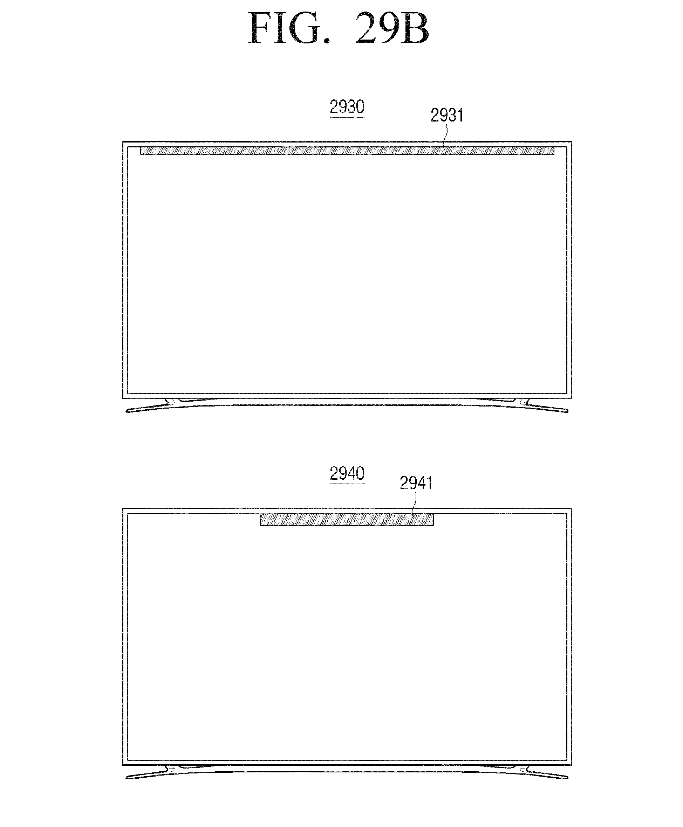

As illustrated in FIGS. 29A and 29B, in response to the user's position being recognized in front of the display apparatus through the image acquisition unit 140, the controller 170 may control the display 120 to display an indicator in a border of a display region.

The controller 170 may change at least one of contrast, color, and a length of the indicator in consideration of a distance to the user from the front of the display apparatus 100. As an example, in 2910 of FIG. 29A, in response to the distance to the user from the front of the display apparatus 100 being within a certain distance (for example, 1m to 1.5m), the controller 170 may control the display 120 to display the indicator 2911 in green. As another example, in 2920 of FIG. 29A, in response to the distance to the user from the front of the display apparatus 100 being the certain distance or more, the controller 170 may control the display 120 to display an indicator 2921 in red.

In another exemplary embodiment, in 2930 of FIG. 29B, in response to the distance to the user from the front of the display apparatus 100 being within the certain distance, the controller 170 may control the display 120 to display an indicator 2931 with a first length. As the distance to the user from the front of the display apparatus 100 is increased, the length of the indicator may be reduced. As illustrated in 2940 of FIG. 29B, in response to the distance to the user from the front of the display apparatus 100 being the certain distance or more, the controller 170 may control the display 120 to display an indicator 2941 with a second length smaller than the first length.

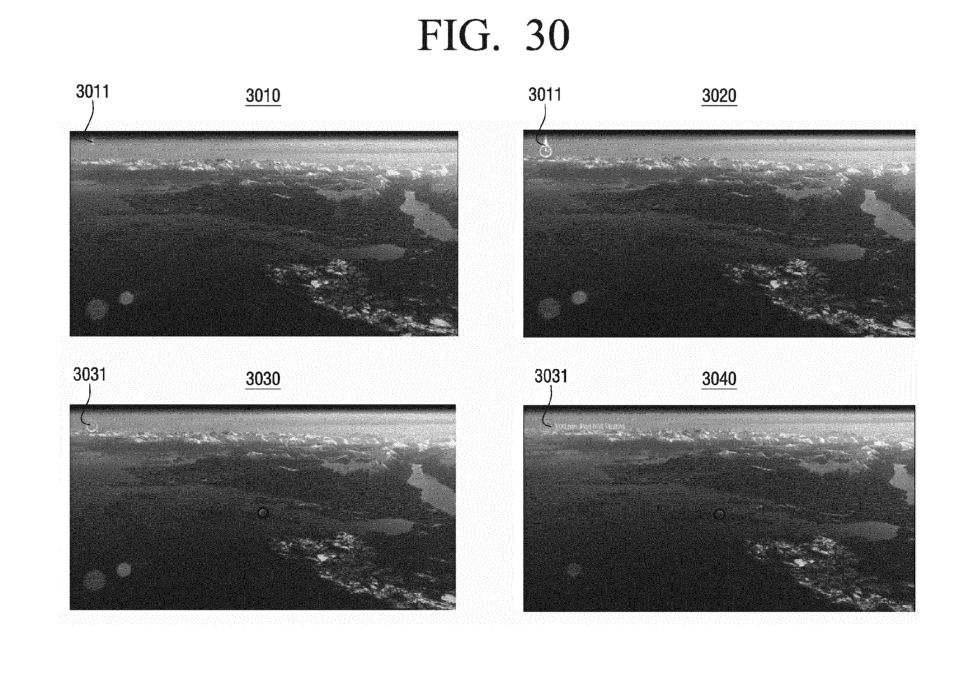

As illustrated in FIG. 30, the controller 170 may control the display 120 to display an animation effect in which additional information appears from an indicator in a border of a display region. As an example, as illustrated in 3010 of FIG. 30, the controller 170 may control the display 120 so that an indicator 3011 located in the border of the display region extends toward the center of the display region. As another example, as illustrated in 3020 and 3030 of FIG. 30, the controller 170 may control the display 120 to modify the extending indicator 3011 and to display a clock icon 3031 as the additional information in the display region. As another example, in 3040 of FIG. 30, the controller 170 may control the display 120 to display detailed additional information together with the clock icon 3031.

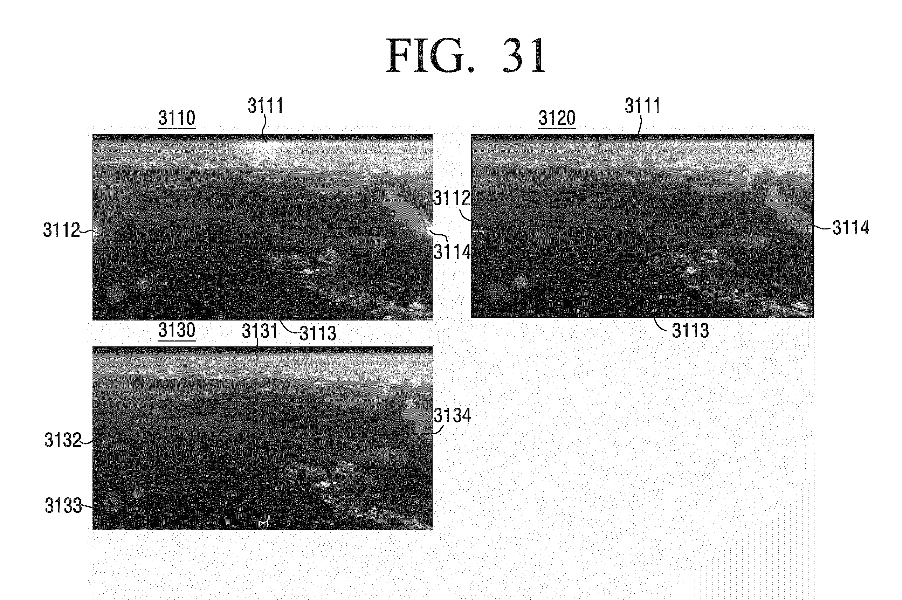

As illustrated in FIG. 31, before control information for controlling the state of the display apparatus 100 is displayed, the controller 170 may control the display 120 to display an animation effect in which the control information appears from an indicator in a border of a display region. As an example, illustrated in 3110 of FIG. 31, the controller 170 may control the display 120 to display indicators 3111 to 3114 in the border of the display region corresponding to a region in which pieces of control information are to be displayed. This state may occur, for example, in response to a remote controller being held by the user or in response to the state of the display apparatus being changed from an off state to an on state. As another example, illustrated in 3120 of FIG. 31, the controller 170 may control the display 120 so that the indicators 3111 to 3114 located in the border of the display region extend toward the center of the display region. As another example, illustrated in 3130 of FIG. 31, the controller 170 may control the display 120 to modify the extending indicators 3111 to 3114 and to display pieces of control information 3131 to 3134 in the display region. In this example, in response to the control information 3131 being selected, the controller may control the display 120 to display a screen including information related to a menu of the display apparatus 100 such as selection of an image content providing apparatus or screen adjustment of the display apparatus 100. In response to the control information 3132 being selected, the controller 170 may control the display 120 to display a screen for selecting adjustment of volume output from the display apparatus 100 or an output apparatus which outputs sound (for example, a speaker, a sound bar, and the like). In response to the control information 3133 being selected, the controller 170 may control the display 120 to display a screen providing service content such as a game, news, or weather. In response to the control information 3134 being selected, the controller 170 may control the display 120 to display a screen for channel adjustment.

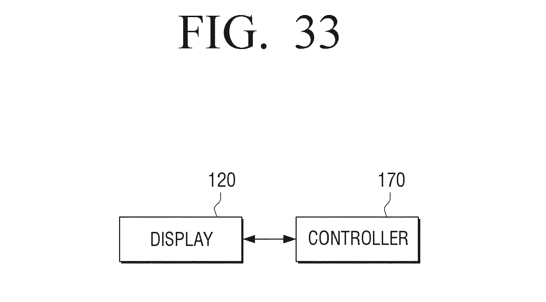

FIG. 33 is a schematic block diagram illustrating a configuration of a display apparatus according to another exemplary embodiment.

Referring to FIG. 33, the display apparatus 100 may include a display 120 and a controller 170.

In an exemplary embodiment, the display 120 may display an indicator in a border of a display region. In this state, the controller 170 may receive a signal for changing the state of the display apparatus 100. In response to the signal for changing the state of the display apparatus 100, the controller 170 may control the display 120 to move the indicator along the border and to stop the movement of the indicator in a predetermined position of the border.

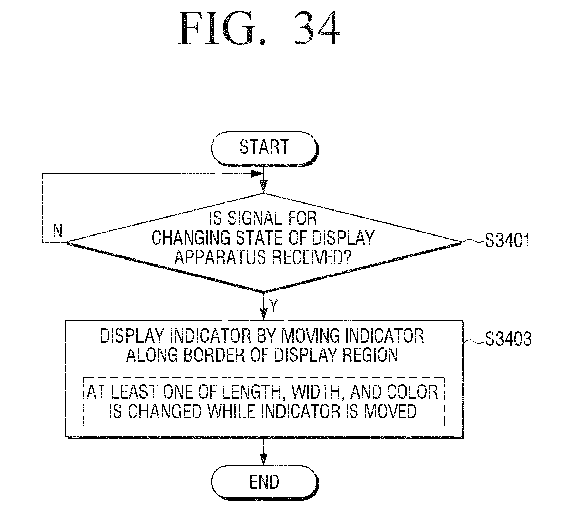

FIGS. 34 to 37 are flowcharts illustrating methods of displaying an indicator in the display apparatus 100 according to one or more exemplary embodiments.

Referring to FIG. 34, the display apparatus 100 may determine whether or not a signal for changing a state of the display apparatus 100 is received (S3401). In response to the determination result (S3401-Y) that the signal for changing the state of the display apparatus 100 is received, the display apparatus 100 may display an indicator by moving the indicator along a border of a display region (S3403). At least one of a length, width, and color may be changed while the indicator is moved.

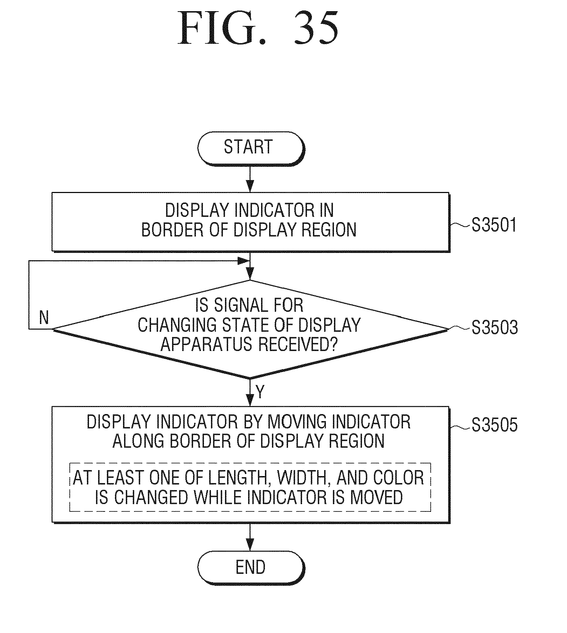

Referring to FIG. 35, the display apparatus 100 may display an indicator in a border of a display region (S3501). While the indicator is displayed, the display apparatus 100 may determine whether or not a signal for changing a state of the display apparatus 100 is received (S3503). In response to the determination result (S3503-Y) that the signal for changing the state of the display apparatus 100 is received, the display apparatus 100 may display the indicator by moving the indicator being displayed along the border of the display region (S3505). At least one of a length, width, and color may be changed while the indicator is moved.

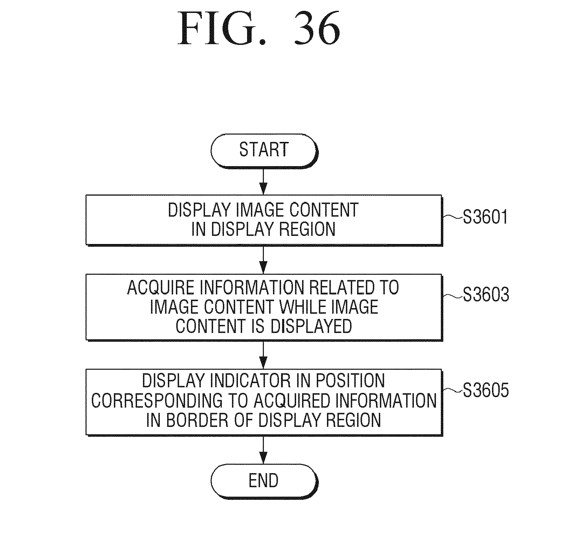

Referring to FIG. 36, the display apparatus 100 may display image content in a display region (S3601). While the image content is displayed, the display apparatus 100 may acquire information related to the image content (S3603). The display apparatus 100 may display an indicator in a position corresponding to the acquired information in a border of the display region (S3605). Operation S3605 may be performed before or after operation S3603, or operations S3603 and S3605 may be simultaneously performed.

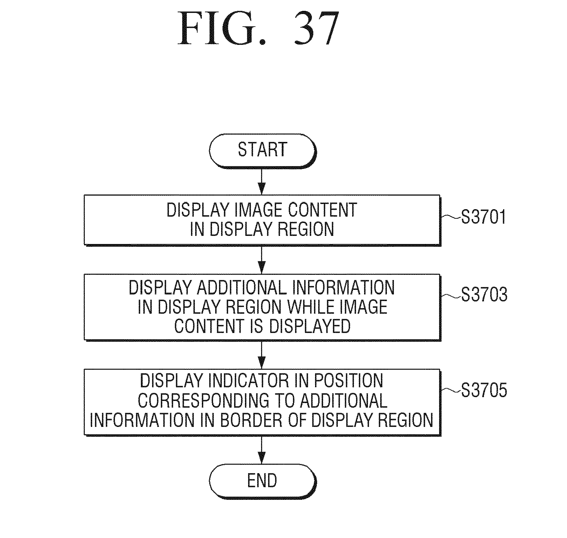

Referring to FIG. 37, the display apparatus 100 may display image content in a display region (S3701). While the image content is displayed, the display apparatus 100 may display additional information in the display region (S3703). The display apparatus 100 may display an indicator in a position corresponding to the position of the additional information in a border of the display region (S3705).

Operation S3705 may be performed before or after operation S3703, or operations S3703 and S3705 may be simultaneously performed

The above-described exemplary indicator display methods of a display apparatus may also be implemented in a program form and provided to a display apparatus. For example, a non-transitory computer-recordable medium, in which a program for including the indicator display method of a display apparatus is stored, may be provided.

The non-transitory computer-recordable medium may be configured to permanently or semi-permanently store data. For example, the above-described programs may be stored in the non-transitory apparatus-readable medium such as a compact disc (CD), a digital versatile disc (DVD), a hard disc, a Blu-ray disc, a universal serial bus (USB), a memory card, or a read only memory (ROM), and provided. The above-described programs may be stored in the storage unit 150 of the display apparatus 100 as an example of the non-transitory computer readable medium, and provided.

The foregoing exemplary embodiments and advantages are described merely for purposes of example and are not to be construed as limiting the present invention. The exemplary embodiments can be readily applied to other types of devices. Also, the description of the exemplary embodiments is intended to be illustrative only, and not to limit the scope of the claims, and many alternatives, modifications, and variations should be apparent to those skilled in the art.

## Claims

1. A method of displaying an indicator in a display apparatus, the method comprising:
receiving a signal for changing a state of the display apparatus;
displaying an indicator by moving the indicator along a border of a display region in response to the received signal; and
stopping a movement of the indicator in a predetermined position of the border,
wherein at least one of a length, width, and color of the indicator is changed while the indicator is moved.

2. The method as claimed in claim 1, wherein, in response to the indicator being a line, a length of the line is changed while the line is moved.

3. The method as claimed in claim 1 or 2, wherein the signal for changing the state of the display apparatus is a signal for changing the state of the display apparatus to an on state from an off state or to the off state from the on state.

4. The method as claimed in any one of claims 1 to 3, further comprising displaying the indicator in the border of the display region before the signal for changing the state of the display apparatus is received.

5. The method as claimed in claim 4, wherein the signal for changing the state of the display apparatus is a signal for changing a channel being displayed in the display apparatus or a signal for changing a volume being output in the display apparatus.

6. The method as claimed in claim 1 or 5, wherein the border of the display region in which the indicator is displayed is covered with a semitransparent bezel or a transparent bezel.

7. A display apparatus which displays an indicator, the display apparatus comprising:
a display; and
a controller configured to control the display to move the indicator along a border of a display region and stop a movement of the indicator in a predetermined position of the border in response to a signal for changing a state of the display apparatus,
wherein at least one of a length, width, and color of the indicator is changed while the indicator is moved.

8. The display apparatus as claimed in claim 7, wherein, in response to the indicator being a line, a length of the line is changed while the line is moved.

9. The display apparatus as claimed in claim 7 or 8, wherein the signal for changing the state of the display apparatus is a signal for changing the state of the display apparatus to an on state from an off state or to the off state from the on state.

10. The display apparatus as claimed in any one of claims 7 to 9, wherein the display displays the indicator in the border of the display region before the signal for changing the state of the display apparatus is received.

11. The display apparatus as claimed in claim 10, wherein the signal for changing the state of the display apparatus is a signal for changing a channel being displayed in the display apparatus or a signal for changing a volume being output in the display apparatus.

12. The display apparatus as claimed in any one of claims 7 to 11, wherein the border of the display region in which the indicator is displayed is covered with a semitransparent bezel or a transparent bezel.
